# FASCICULE DE BREVET EUROPEEN

(11) **EP 0 584 298 B1**
(45) Date de publication et mention de la délivrance du brevet: **12.03.1997**
(21) Numéro de dépôt: 93902376.8
(22) Date de dépôt: 23.12.1992
(51) Int. Cl.: F16L 9/22, E02D 29/05, F16L 1/038

(54) **ENCEINTE ALLONGEE DE GRANDE SECTION ET SON PROCEDE DE REALISATION**
LANGFÖRMIGE ABDECKUNG GROSSEN DURCHMESSERS SOWIE HERSTELLUNGSVERFAHREN
ELONGATED HOUSING OF LARGE CROSS-SECTION AND ITS FABRICATION METHOD

(30) Priorité: 24.12.1991 FR 9116128
(43) Date de publication de la demande: 02.03.1994
(73) Titulaire: Matière, Marcel, F-15000 Aurillac (FR)
(72) Inventeur: Matière, Marcel, F-15000 Aurillac (FR)
(74) Mandataire: Le Brusque, Maurice
(86) Numéro de dépôt international: FR9201235
(87) Numéro de publication internationale: WO9313344

(56) Documents cités:
- EP-A- 0 294 304
- EP-A- 0 381 547
- EP-A- 0 392 912
- DE-U- 6 906 970
- US-A- 1 642 559
- TR0VAUX no. 584, Janvier 1984, PARIS, FRANCE pages 25 - 31 M. MATIERE 'le conduit MATIERE'
- PATENT ABSTRACTS OF JAPAN vol. 12, no. 251 (M-718)(3098) 15 Juillet 1988 & JP-A-63 035 908 (NIPPON CONCRETE IND CO LTD) 16 Février 1988

## Description

L'invention a pour objet une enceinte allongée de grande section transversale, pouvant supporter une pression interne élevée, éventuellement supérieure à 10 bars, ainsi que des sollicitations extérieures, et s'applique plus spécialement à la réalisation d'une conduite de transfert de fluides sous pression, destinée à être réalisée à ciel ouvert et éventuellement enterrée sous un remblai.

D'une façon générale, l'invention peut s'appliquer à la réalisation de toute conduite à grand débit de transfert de fluide sous pression, par exemple pour la réalisation de systèmes d'assainissement ou d'adduction d'eau, le chauffage urbain, ou des conduites forcées pour l'alimentation d'usines hydro-électriques.

Les conduites de transfert de fluide sont généralement réalisées au moyen de tronçons de tubes métalliques, de section droite circulaire, qui sont mis bout à bout et reliés d'une façon étanche.

On sait, en effet, qu'une paroi métallique circulaire de faible épaisseur peut résister à des pressions internes importantes et c'est pourquoi, pour des raisons d'économie de fabrication et de transport, les conduites sous pression sont réalisées en métal au moins chaque fois que les surcharges externes sont peu importantes, par exemple dans le cas des conduites forcées. Cependant, lors de la pose, une conduite à paroi métallique mince peut s'ovaliser sous l'effet de son propre poids, ce qui peut gêner la réalisation de la soudure. On est alors amené à placer des raidisseurs qui compliquent la réalisation, alourdissent la conduite et, si on les laisse en place, constituent des obstacles à la circulation du fluide.

Dans de nombreux cas, par exemple pour des réseaux d'assainissement ou d'adduction d'eau, la conduite est placée dans le fond d'une tranchée et enterrée sous un remblai. Généralement, la tranchée est remblayée avant la mise en pression de la conduite qui se trouve ainsi soumise, à vide, aux sollicitations extérieures appliquées par le remblai et des surcharges éventuelles. Après la mise en service, ces sollicitations extérieures sont compensées par la pression interne, mais celle-ci peut varier et, parfois, être supprimée. Dans tous ces cas, la charge appliquée peut entraîner une ovalisation et même un écrasement de la conduite.

C'est pourquoi les conduites enterrées sont habituellement constituées soit de tubes métalliques d'assez forte épaisseur et avec des raidisseurs externes, soit de tubes en béton armé avec ou sans précontrainte.

Cependant, pour permettre le transport et la mise en place de tels tubes, on est obligé de limiter leurs dimensions et, par conséquent, la section de passage, le diamètre ne dépassant pas, en pratique, 2,5 mètres pour rester dans le gabarit routier.

Pour résoudre ce problème, on a déjà proposé de réaliser des conduites enterrées de grande section au moyen de panneaux métalliques assemblés et ayant, généralement, un profil ondulé, ce qui leur permet de mieux résister aux surcharges externes et aux tassements différentiels. Toutefois, de telles structures ne sont pas prévues pour supporter une pression interne et il existe un certain risque d'écrasement de la conduite sous l'effet des charges externes.

Pour réaliser des conduites de grande section susceptibles de résister à la fois à une pression interne et à des surcharges externes, le même inventeur a déjà proposé, dans le brevet européen 0392.912, de réaliser une enceinte tubulaire de type mixte à section cylindrique tronquée comprenant, en section droite, une partie inférieure en forme de dalle massive en béton armé et une partie supérieure en forme de voûte incurvée constituée d'une paroi mince métallique dont les deux extrémités latérales sont fixées respectivement sur la dalle en béton, chacune par une pièce de jonction scellée sur la face supérieure de la dalle plane et se raccordant tangentiellement à l'extrémité latérale correspondante de la voûte.

Une telle réalisation mixte permet d'utiliser de façon optimale les matériaux.

En effet, lorsque la conduite est sous pression, la voûte métallique est soumise uniquement à des efforts de traction et peut être constituée d'éléments de paroi mince métallique d'assez faible épaisseur, faciles à manipuler et qui peuvent être reliés par soudure pour assurer l'étanchéité sous pression.

Mais en outre, grâce à sa section tronquée à la base, la partie supérieure métallique résiste bien, par effet de voûte, aux sollicitations externes, même à vide. La base plane, qui sert de raidisseur, est soumise à des efforts de flexion, mais peut y résister dans de bonnes conditions du fait qu'elle est constituée d'une dalle en béton dont on peut déterminer l'épaisseur et le ferraillage en fonction des efforts supportés. En outre, une telle base plane donne à la conduite une bonne surface d'assise permettant de répartir les efforts appliqués sur le sol et de résister aux tassements différentiels.

La dalle peut avantageusement être coulée en place, à l'avancement, ou bien être constituée d'éléments préfabriqués placés les uns à la suite des autres.

Dans le brevet EP 0392.912 déjà cité, la voûte métallique est reliée à la dalle, le long de ses deux bords latéraux, par des profilés comportant une partie supérieure se raccordant tangentiellement à la voûte et une partie inférieure scellée sur la face supérieure de la dalle d'une façon permettant de résister aux efforts d'arrachement et, en même temps, d'assurer l'étanchéité.

Un tel mode de fixation est bien adapté au cas où la dalle est constituée d'éléments préfabriqués, mais peut compliquer la réalisation lorsque la dalle est coulée en place. De plus, pour de fortes pressions internes, on peut craindra, à la longue, une fissuration du béton, compte tenu des efforts appliqués.

L'invention a donc pour objet de nouvelles dispositions qui permettent de simplifier le mode de fixation de la voûte métallique, de diminuer les risques de fissuration du béton et d'alléger la dalle. En outre, la réalisation de l'ensemble de la conduite peut être considérablement simplifiée par la mise en oeuvre de ces nouvelles dispositions.

L'invention s'applique donc, d'une façon générale, à une enceinte allongée du type décrit dans le brevet EP 0392.912, constituée d'une partie inférieure formée d'une dalle rigide en béton, comportant une face inférieure reposant sur le sol, une face supérieure et deux faces latérales parallèles à l'axe longitudinal, et d'une partie supérieure constituée d'une paroi métallique mince en forme de voûte incurvée s'étendant entre deux extrémités latérales parallèles à l'axe longitudinal et reliées à la dalle, chacune par une pièce longitudinale de jonction ayant une partie supérieure qui se raccorde tangentiellement à l'extrémité latérale de la voûte et une partie inférieure fixée sur la dalle.

Conformément à l'invention, la face supérieure de la dalle a une largeur sensiblement égale à l'écartement entre les deux extrémités latérales de la voûte incurvée et chaque pièce de jonction est constituée par une plaque plane appliquée de l'extérieur contre la face latérale correspondante de la dalle et associée à des moyens de maintien susceptibles de s'opposer au ripage de ladite plaque le long de la face latérale correspondante de la dalle sous l'effet des efforts dûs à la pression interne et au décollement desdites plaques sous l'effet des sollicitations externes.

De façon préférentielle, pour résister de façon optimale aux sollicitations externes comme à la pression interne, la voûte couvre sensiblement un demi-cercle centré sensiblement au niveau de la face supérieure de la dalle.

Cependant, pour assurer une large section de transport sans augmenter exagérément la largeur de la dalle, il peut être intéressant de donner à la voûte un angle au centre supérieur à 180°. Dans ce cas, les deux faces latérales de la dalle peuvent être inclinées par rapport à la face supérieure horizontale d'un angle correspondant à l'orientation de la tangente à la naissance de la voûte, de façon à permettre l'application des deux plaques latérales de fixation de la voûte, placées dans le prolongement de celle-ci.

De préférence, les plaques longitudinales de fixation sont appliquées contre les faces latérales de la dalle sous une pression au moins suffisante pour s'opposer, par frottement, au ripage de la plaque.

Toutefois, pour améliorer la résistance à la flexion de la dalle et alléger celle-ci, il est avantageux de la soumettre à des efforts de précontrainte transversaux.

Dans ce cas, les deux plaques longitudinales de fixation de la voûte sur la dalle peuvent être reliées entre elles par une pluralité de barres transversales réparties sur toute la longueur de l'enceinte et s'étendant chacune sur toute la largeur de la dalle, en traversant les deux plaques et la dalle, chaque barre étant munie, à chaque extrémité, d'un moyen extérieur d'appui sur la plaque correspondante, lesdites barres étant soumises à une tension de précontrainte susceptible d'assurer simultanément la résistance de la dalle aux efforts de flexion dûs à la pression interne et l'application de chaque plaque de fixation sur la face latérale correspondante de la dalle sous une pression suffisante pour s'opposer au ripage de la plaque.

Pour assurer l'étanchéité, il est préférable que l'enceinte tubulaire soit entièrement limitée par des parois métalliques soudées entre elles. Dans ce cas, les deux extrémités latérales de la voûte sont reliées entre elles par une plaque transversale mince recouvrant l'une des faces horizontales, respectivement supérieure ou inférieure, de la dalle et comportant deux bords longitudinaux parallèles fixés rigidement et de façon étanche, respectivement le long de chaque extrémité latérale de la voûte.

Cette plaque transversale assure donc, simultanément l'étanchéité et le maintien des plaques longitudinales, notamment pour s'opposer à leur écartement sous l'effet des sollicitations externes.

Pour améliorer la résistance aux effets de ripage, chaque plaque de fixation peut être avantageusement munie, sur sa face interne tournée vers la dalle, d'au moins une partie d'accrochage en saillie, telle qu'une nervure, coopérant avec au moins une partie en creux conjuguée, telle qu'une rainure, ménagée au niveau voulu sur la face latérale correspondante de la dalle.

Dans le cas où la dalle est coulée en place et forme donc une face continue, l'étanchéité peut éventuellement être assurée par la face supérieure de la dalle elle-même. Un cordon d'étanchéité sera alors interposé entre chaque plaque de fixation et la face latérale de la dalle sur laquelle elle est appliquée.

La voûte est donc constituée de tronçons longitudinaux préfabriqués placés les uns à la suite des autres et, dans un premier mode de réalisation, chaque tronçon de voûte comprend une partie centrale en forme de demi-coquille constituant la voûte proprement dite et prolongée, sur chaque côté, par une partie sensiblement plane constituant la bride de fixation, chaque demi-coquille constituant, avec ses deux brides, un élément monobloc couvrant l'ensemble de la section transversale.

Mais, dans un autre mode de réalisation, la voûte peut aussi être constituée d'au moins trois éléments préfabriqués, respectivement au moins un élément central incurvé en forme de voûte et deux éléments latéraux, comportant chacun une partie inférieure plane formant la plaque de fixation sur la face latérale correspondante de la dalle et une partie supérieure susceptible de se raccorder tangentiellement à un bord latéral de l'élément central et reliée à ce dernier par une soudure continue.

On notera que cette partie supérieure de la plaque dépassant au-dessus du niveau de la face supérieure de la dalle constitue avantageusement un rebord de centrage de l'élément de voûte.

Les deux plaques longitudinales peuvent être fixées à l'avance sur une plaque transversale de façon à constituer un ensemble préfabriqué susceptible d'être placé séparément sur la dalle, l'élément de voûte étant ensuite fixé sur les bords supérieurs des deux plaques longitudinales.

La plaque transversale peut, d'ailleurs, être constituée de deux parties séparées soudées, respectivement, chacune sur l'un des éléments latéraux et s'étendant l'une vers l'autre en se recouvrant partiellement de façon à permettre un léger rapprochement des éléments latéraux lors de leur fixation sur la dalle et de la mise en précontrainte, les deux parties de la plaque transversale étant soudées après stabilisation.

Une telle enceinte allongée peut être réalisée de différentes façons.

Selon un premier procédé, particulièrement avantageux, après avoir ouvert une tranchée sur une certaine longueur et ménagé un fond aplani et tassé, on réalise à l'avancement, sur ledit fond, une dalle continue en béton armé ou précontraint qui peut être coulé en place entre deux coffrages plans dont l'écartement, au moins au niveau de la face supérieure de la dalle, est sensiblement égal à l'écartement entre les extrémités latérales du secteur circulaire et, pour réaliser chaque tronçon de la partie supérieure métallique, on applique sur les faces latérales de la dalle, deux plaques longitudinales que l'on soude sur les extrémités des plaques déjà posées et l'on pose le tronçon de voûte en le soudant, d'une part, le long du joint transversal avec le tronçon posé précédemment et, d'autre part, sur les extrémités supérieures des plaques longitudinales.

Il est particulièrement intéressant d'utiliser comme coffrage les plaques longitudinales qui sont alors posées en même temps que le ferraillage en prenant appui sur celui-ci, la dalle en béton étant coulée entre lesdites plaques.

Dans le cas le plus général où la dalle est recouverte d'une plaque transversale, celle-ci peut être soudée à l'avance sur deux les plaques longitudinales de façon à former un ensemble de jonction qui peut être posé sur la dalle et coulisser le long de celle-ci jusqu'au contact avec l'ensemble précédemment posé avec lequel il est soudé.

Mais un tel ensemble de jonction peut aussi être utilisé comme un coffrage dans lequel on moule la partie correspondante de la dalle qui est alors constituée d'éléments préfabriqués placés les uns à la suite des autres, chaque élément étant constitué d'un ensemble de jonction associé à un élément de dalle. Pour réaliser un nouveau tronçon de l'enceinte, on pose d'abord un élément de dalle en l'alignant avec la partie déjà posée, on soude les bords en regard des plaques longitudinales et des plaques transversales, puis on pose l'élément de voûte sur l'ensemble correspondant en le soudant le long de ses extrémités latérales avec les plaques longitudinales et le long d'un joint transversal avec l'élément de voûte adjacent déjà en place.

Mais un autre mode de réalisation avantageux est possible dans le cas où la partie métallique de l'enceinte est constituée de tronçons préfabriqués comprenant chacun une paroi incurvée prolongée par deux plaques longitudinales et dont les bords inférieurs sont reliés par une plaque transversale. Dans ce cas, en effet, après avoir ouvert la tranchée, on pose d'abord l'un à la suite de l'autre lesdits tronçons métalliques, chacun reposant sur la surface de pose par la plaque transversale constituant sa partie inférieure, puis on les soude entre eux au moins sur une certaine longueur et l'on coule la dalle en béton à l'intérieur de l'enceinte, dans le coffrage constitué par la partie inférieure de celle-ci.

Un tel mode de réalisation peut encore être perfectionné en reliant les deux plaques longitudinales par deux parois transversales fixées respectivement le long des bords inférieurs et le long des extrémités supérieures des plaques longitudinales. L'ensemble des deux parois transversales et des deux plaques longitudinales forme ainsi un caisson métallique à section fermée qui est rempli de béton de façon à constituer la dalle, celle-ci étant armée par la paroi métallique dudit caisson.

Chaque fois que cela sera possible, le chantier sera équipé d'une cintreuse permettant de réaliser sur place les éléments de voûte, les tôles étant ainsi transportées planes. Cette cintreuse peut d'ailleurs être posée sur la dalle déjà bétonnée.

Mais l'invention sera mieux comprise par la description détaillée de plusieurs modes de réalisation, donnés à titre d'exemple et représentés sur les dessins annexés.

La Figure 1 est une vue schématique, en coupe transversale, d'une enceinte allongée selon l'invention.

La Figure 2 est une figure en coupe transversale d'un autre mode de réalisation.

La Figure 3 est une vue de détail à échelle agrandie de la fixation d'une plaque par précontrainte.

Les Figures 4 et 5 représentent schématiquement, en coupe transversale, d'autres modes de réalisation d'une enceinte selon l'invention.

La Figure 6 montre, en deux étapes, la réalisation d'un élément inférieur préfabriqué.

La Figure 7 est une vue de détail d'un mode particulier de montage de la voûte.

Les Figures 8, 9, 10, 11, représentent, schématiquement, les étapes successives de construction d'une conduite selon différents processus adaptés chacun à l'un des modes de réalisation de l'enceinte.

La Figure 12 montre, en coupe longitudinale, un joint transversal entre deux éléments de dalle préfabriquée.

La Figure 13 montre, en perspective, un mode de réalisation particulier permettant un changement progressif de section.

Les Figures 14, 15 et 16 montrent, en coupe transversale, d'autres modes de réalisation de l'invention.

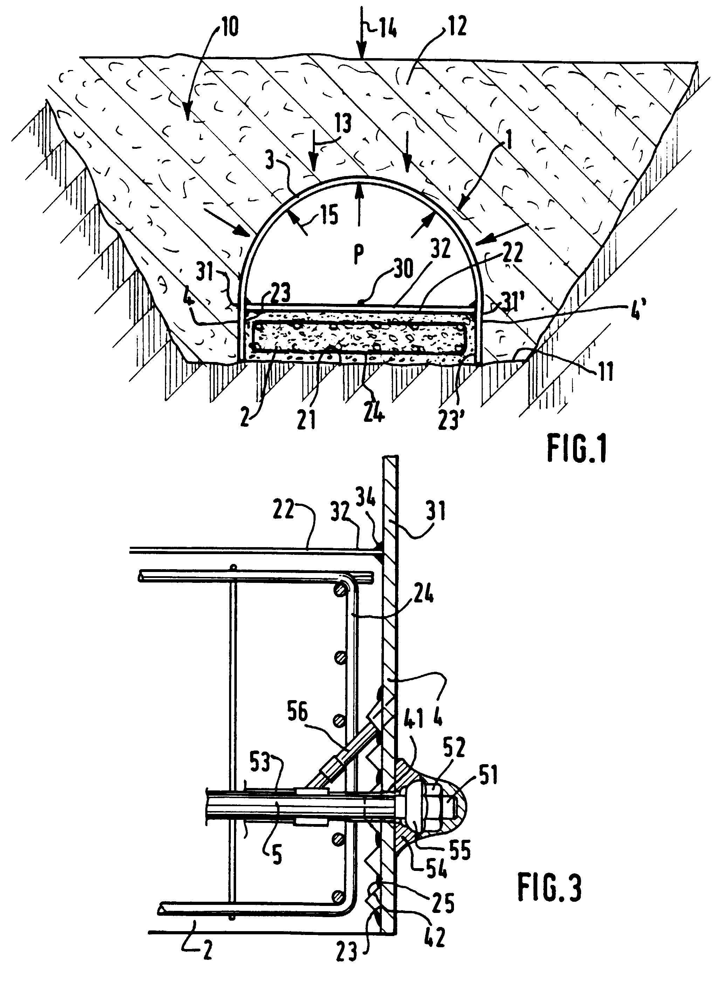

Sur la Figure 1, on a représenté schématiquement et en coupe transversale, une enceinte allongée 1 placée dans une tranchée 10 et reposant sur le fond 11 aplani et tassé de celle-ci, l'enceinte étant recouverte, après la pose, d'un remblai 12.

L'enceinte 1 est constituée de deux parties, respectivement une partie inférieure 2 constituée d'une dalle rigide plane réalisée, normalement, en béton armé ou précontraint, et une partie supérieure 3 constituée d'une paroi métallique mince en forme de voûte cylindrique limitant, avec la dalle, un espace tubulaire A à section circulaire tronquée dans lequel peut circuler un fluide se trouvant à une pression élevée P pouvant, par exemple, dépasser 10 bars.

Comme on le verra plus loin, la dalle rigide 2 est, de préférence, coulée en place, à l'avancement, mais elle peut aussi être constituée d'éléments préfabriqués mis bout à bout.

La partie supérieure 3 est constituée d'éléments de paroi métallique mince formant des tronçons placés les uns à la suite des autres.

Chaque tronçon a la forme d'une voûte incurvée en arc de cercle entre deux extrémités latérales 31, 31', prolongées tangentiellement par deux plaques planes 4, 4'.

De préférence, mais de façon non limitative, la voûte 3 couvre un demi-cercle.

La dalle 2, qui repose sur le sol par sa face inférieure 21, est limitée par une face supérieure horizontale 22 et deux faces latérales 23, 23', parallèles à l'axe de l'enceinte.

Dans le mode de réalisation le plus courant, les faces latérales 23, 23', sont verticales. Cependant, d'autres dispositions sont possibles comme on le verra plus loin.

Selon la caractéristique essentielle de l'invention, la largeur de la face supérieure 22, qui correspond à l'écartement des faces latérales 23, 23', est égale à la distance entre les extrémités latérales 31, 31', de la voûte cylindrique 3 c'est-à-dire, dans l'exemple représenté, le diamètre de la section circulaire.

De la sorte, les deux plaques longitudinales 4, 4', prolongeant vers le bas la voûte 3 peuvent être appliquées de l'extérieur sur les faces latérales 23, 23', sur lesquelles elles sont fixées.

Sous l'effet des efforts radiaux 15 dûs à la pression interne P, la voûte 3 est soumise à des contraintes de traction qui sont reprises au niveau des extrémités latérales 31, 31', par les plaques 4, 4'. Celles-ci peuvent donc être fixées sur la dalle 2 par des moyens permettant simplement de résister aux efforts de ripage qui s'exercent le long des faces latérales 23, 23', de la dalle lorsque l'enceinte est mise sous pression.

Par ailleurs, la partie supérieure 3 résiste bien, par effet de voûte, aux sollicitations externes 13 appliquées par le remblai 12 ou des surcharges, même lorsque la pression interne est supprimée. Il est simplement nécessaire de maintenir constant l'écartement des extrémités latérales 31, 31' de la voûte 3 et ceci peut être obtenu facilement au moyen d'une plaque mince 32 qui recouvre la face supérieure 22 de la dalle 2 et est soudée par ses bords latéraux sur les extrémités 31, 31', de la voûte. La plaque horizontale 22 forme avec les plaques longitudinales 4, 4', un caisson qui peut être solidarisé avec la dalle 2 par de simples pattes de scellement réparties sur toute la surface.

La dalle en béton armé 2, qui assure le raidissement de l'enceinte 1, est particulièrement apte à résister aux efforts de flexion auxquels elle est soumise. Il suffit, en effet, de déterminer les caractéristiques dimensionnelles et l'armature de la dalle en fonction des efforts résultant de la pression interne.

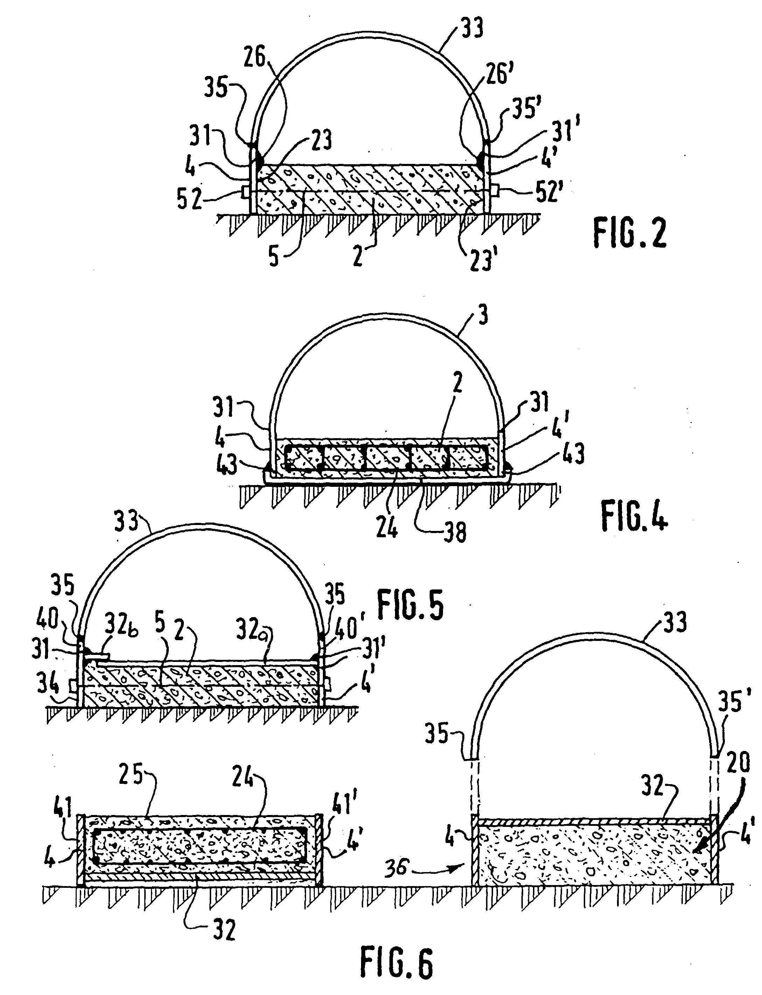

Pour mieux résister aux efforts de ripage en augmentant les frottements, les plaques longitudinales 4, 4', peuvent être appliquées avec une certaine pression sur les faces latérales23, 23', de la dalle. A cet effet, il est avantageux, comme on l'a représenté sur la Figure 2, de relier entre elles les deux plaques longitudinales 4, 4', au moyen d'une pluralité de barres de tension 5 qui s'étendent sur toute la largeur de la dalle 2 et dont les extrémités 51, 51', traversent les plaques longitudinales 4, 4', et sont munies de têtes élargies 52, 52', prenant appui, de l'extérieur, sur les deux plaques 4, 4'. Ainsi, en mettant en tension les barres 5, on applique fortement les plaques longitudinales 4, 4', sur les faces latérales 23, 23', de la dalle 2.

La tension des barres 5 peut être simplement suffisante pour assurer la solidarisation de la voûte 3 avec la dalle 2, grâce au frottement engendré, et résister ainsi à la tendance au décollement et au soulèvement de la voûte sous l'action de la pression interne P.

Par ailleurs, en l'absence de pression, les barres 5 s'opposent à la tendance à l'écartement des extrémités latérales 31, 31', sous l'effet des sollicitations externes 13 exercées par le remblai 12 et assurent le maintien de la forme demi-circulaire de la paroi 3 qui résiste ainsi au flambement et à la tendance à l'ovalisation sous les charges appliquées par le remblai.

Mais les barres 5 peuvent aussi constituer des barres de précontrainte mises sous une tension suffisante pour permettre à la dalle 2 de résister aux efforts de flexion auxquels elle est soumise sous l'action de la pression interne P. Grâce à cette précontrainte, il est possible d'alléger sensiblement la dalle 2 et son armature 24.

La précontrainte de la dalle 2 peut être réalisée de façon classique, par exemple comme on l'a représenté en détail sur la Figure 3. Chaque barre 5 passe avec jeu dans un canal 53, ménagé dans l'épaisseur de la dalle 2, perpendiculairement aux deux faces latérales 23, 23', de celle-ci. Chaque extrémité 51 d'une barre 5 traverse la plaque correspondante 4 par un orifice 41 ménagé à cet effet et est filetée de façon à permettre le vissage d'un écrou 52 qui prend appui sur la plaque 4, par l'intermédiaire d'une pièce torique 53 et d'une pièce d'appui 54 de formes conjuguées.

Par des moyens classiques, on met les barres 5 à la tension de précontrainte voulue et on les bloque au moyen des écrous 52 puis, par un évent 56 ménagé à cet effet, on injecte un coulis de ciment dans le canal 53 de façon à solidariser les barres de précontrainte avec la dalle 2.

Dans ce cas, le ferraillage 24 sert essentiellement à permettre la manipulation de la dalle lorsque celle-ci est constituée d'éléments préfabriqués et à éviter les risques de fissuration, notamment sous l'effet de la précontrainte.

On assure ainsi, d'une part, la parfaite solidarisation de la voûte 3 avec la dalle 2 et, d'autre part, une rigidité de celle-ci suffisante pour résister aux efforts de flexion sans qu'il soit nécessaire d'augmenter son épaisseur ou l'importance du ferraillage.

De préférence, pour améliorer la solidarisation entre les plaques 4, 4', et la dalle 2, chaque plaque 4, 4', est munie, sur sa face interne tournée vers la dalle, de parties en saillie constituées, par exemple, de cornières soudées 42, qui s'engagent dans des rainures correspondantes 25 ménagées sur les faces latérales 23, 23', de la dalle. De plus, au niveau de chaque barre de précontrainte, la plaque 4 est munie d'une pièce de renfort 43 qui entoure l'orifice 41 et pénètre dans un logement correspondant ménagé sur la face latérale 23 de la dalle.

Il faut noter que l'utilisation de parties d'accrochage en saillie pour s'opposer à la tendance au ripage des plaques de fixation 4, 4', sera utile dans tous les cas, même lorsque les plaques de fixation sont simplement appliquées sans pression sur les faces latérales de la dalle.

Lorsque la dalle est coulée en place, elle peut, à elle seule, former une face continue de fermeture de l'enceinte si le fluide transporté n'est pas agressif à l'égard du béton et si la qualité de celui-ci permet d'assurer l'étanchéité. Il suffit alors, comme on l'a représenté sur la Figure 2, d'interposer des cordons d'étanchéité 26 entre les plaques longitudinales 4, 4', et les faces latérales 23, 23' de la dalle 2, le serrage des joints étant réalisé par la simple application sous pression des plaques longitudinales 4, 4'.

Le plus souvent, cependant, il est préférable que l'espace fermé tubulaire de circulation du fluide, soit entièrement limité par des parois métalliques soudées, selon la disposition représentée sur la Figure 1. La dalle 2 est alors recouverte d'une plaque transversale 32 soudée sur les extrémités latérales de la voûte 3. On réalise ainsi facilement l'étanchéité, la paroi étant entièrement soudée , et l'on évite le contact entre le béton et le fluide transporté.

Comme la plaque 32 est appliquée sur la dalle 2 par la pression P, elle peut constituer une simple peau d'étanchéité de faible épaisseur comme indiqué Fig. 3.

On notera qu'il n'est pas indispensable d'utiliser des barres de précontrainte 5, le maintien de l'écartement des extrémités latérales 31, 31', pouvant être assuré simplement par la plaque 32. Les plaques longitudinales 4, 4', peuvent alors être fixées sur les faces latérales 23, 23', de la dalle 2, par exemple par des boulons d'ancrage permettant d'appliquer les plaques 4, 4', sur les faces latérales 23, 23', avec une pression simplement suffisante pour assurer, par frottement, le maintien de la forme de la voûte 3 en empêchant le soulèvement des extrémités 31, 31', de la voûte 3.

En particulier, si les plaques longitudinales 4, 4', sont munies de moyens d'accrochage tels que les parties en saillie 42, il suffit de maintenir constant leur écartement pour assurer la solidarisation de la voûte 3 avec la dalle 2.

Il faut, cependant, que l'écartement des plaques longitudinales 4, 4', corresponde exactement à celui des faces latérales 23, 23' de la dalle. On peut assurer le contact par des cales de réglage, mais il est plus intéressant, comme on l'a indiqué sur la Figure 5, de réaliser la plaque transversale 32 en deux parties, une partie 32a qui s'étend sensiblement sur toute la largeur de la dalle 2 mais n'est soudée que sur un côté, sur l'une des plaques longitudinales 4', et une seconde partie 32b soudée par un côté sur l'autre plaque longitudinale 4 et de largeur telle que son autre côté recouvre l'extrémité de la partie 32. De la sorte, les deux plaques 4, 4', associées respectivement aux deux parties 32b, 32a, sont placées sur la dalle 2 sans difficulté,' et peuvent éventuellement se rapprocher pour l'application des plaques 4, 4', sur les faces 23, 23', puis, après stabilisation, on soude l'une sur l'autre les extrémités qui se recouvrent des deux parties 32a, 32b.

Mais l'invention ne se limite pas à ces modes de réalisation, d'autres variantes pouvant être imaginées.

Par exemple, dans le cas de la Figure 4, la liaison entre les extrémités latérales 31, 31', de la voûte 3 est assurée par une plaque transversale 38 qui est soudée sur les bords inférieurs 43 des plaques longitudinales 4, 4'. De la sorte, chaque tronçon métallique est constitué d'une voûte 3 dont les extrémités sont reliées par une base 38 qui repose sur le sol. La dalle 2 se trouve alors à l'intérieur de la paroi métallique fermée ainsi constituée et est avantageusement coulée à l'intérieur du coffrage ainsi constitué par la partie inférieure de la structure métallique.

Par ailleurs, la voûte 3 peut être réalisée en un seul ensemble comme on l'a représenté sur la Figure 1, la partie incurvée demi-cylindrique 3 étant simplement prolongée, au-delà de ses extrémités latérales 31, 31', par des parties planes qui constituent les deux plaques longitudinales de fixation 4, 4'. Chaque demi-coquille constitue alors, avec ses deux brides 4, 4', un élément monobloc qui couvre l'ensemble de la section transversale.

Mais, pour faciliter le transport, en particulier dans le cas de grandes sections, il peut être préférable de réaliser la partie métallique en plusieurs parties, respectivement un élément central 33 incurvé en forme de voûte et les deux plaques longitudinales 4, 4', dont la plus grande partie est appliquée contre les faces latérales 23, 23', et dont les bords supérieurs 40, 40', se raccordent et sont fixés par des soudures 35 sur les bords latéraux inférieurs de l'élément central 33. Les soudures 35, 35', peuvent être placées au niveau des extrémités latérales 31, 31', et de la plaque transversale 32. Dans ce cas, la paroi incurvée 33 couvre l'ensemble de la voûte.

Mais les soudures 35, 35', peuvent aussi être placées à une certaine distance au-dessus des extrémités latérales 31, 31', chaque plaque longitudinale 4, 4', comprenant alors une partie inférieure plane de fixation et une partie supérieure incurvée 40, 40', se raccordant tangentiellement à la voûte 33.

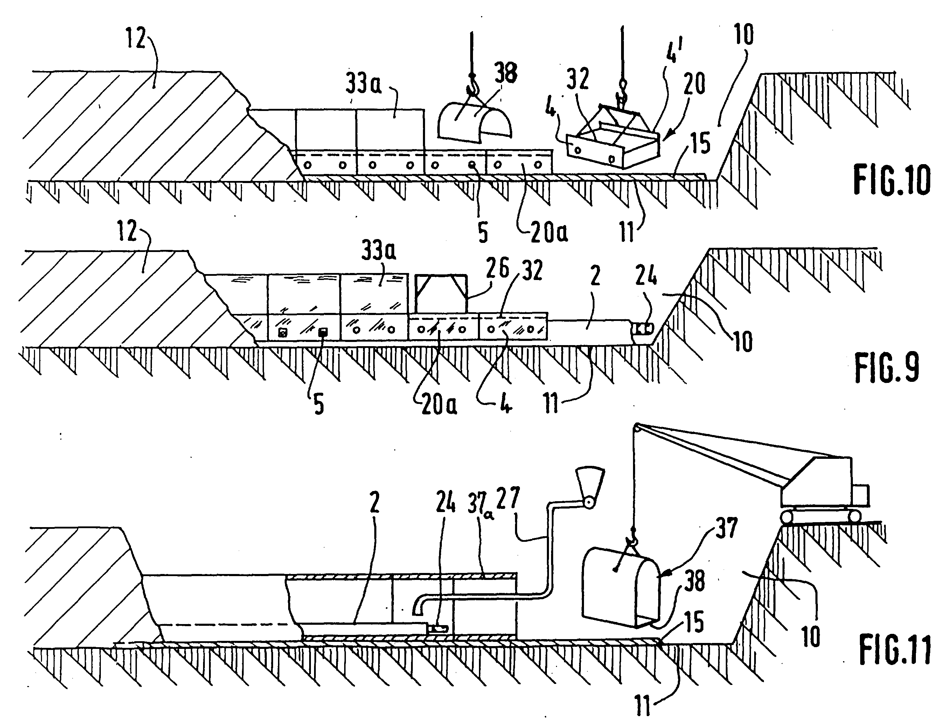

Le raccordement et la soudure peuvent se faire bord à bord comme on l'a indiqué sur les Figures 2 et 5. Mais il est aussi possible de prévoir un recouvrement de chaque extrémité latérale 31 (31') de la voûte par la partie supérieure 40 (40') de la plaque 4 (4'), comme le montre la Figure 7. Une telle disposition facilite la mise en place et le centrage de la voûte 3, comme on le verra plus loin.

Les deux plaques longitudinales 4, 4' peuvent être reliées à l'avance avec la plaque transversale 32 de façon à constituer un ensemble métallique monobloc 36 à section transversale rectangulaire qui peut avantageusement servir de coffrage pour la réalisation d'un élément de dalle, de la façon représentée sur la Figure 6.

En effet, comme on l'a indiqué sur la partie gauche de la Figure 6, l'ensemble métallique 36 ainsi formé peut être retourné pour constituer un moule ayant pour fond la plaque transversale 32 et pour côtés les deux plaques 4, 4', les deux autres côtés pouvant être fermés par des panneaux amovibles.

Dans le moule 36 ainsi formé, on place le ferraillage 24 et, le cas échéant, des tubes 53' débouchant dans des orifices 41, 41' ménagés dans les éléments 34, 34'. Puis on coule le béton 25.

De préférence, la plaque horizontale 32 a été munie, sur sa face tournée vers l'intérieur du moule, de parties d'accrochage en saillie destinées à solidariser la plaque avec le béton 25.

De même, des profilés 42 ont pu être placés à l'avance sur les faces internes des plaques 4, 4', de façon à s'incorporer dans le béton lors de la coulée de la dalle 2.

Après durcissement du béton, et enlèvement des panneaux d'extrémité, on dispose d'un élément de dalle préfabriquée 20, limité sur deux côtés latéraux et sur une face horizontale par les plaques longitudinales 4, 4', et la plaque transversale 32. Des parties d'accrochage d'élingues ont pu être ménagées, par exemple sur les plaques 4, 4', de façon à permettre la manipulation de l'élément 20.

Chaque élément de dalle 20 ainsi préfabriqué est donc muni à l'avance de la plaque transversale 32 et des deux plaques longitudinales 4, 4', sur lesquelles peut être posé et soudé un élément de voûte 33, comme on l'a représenté sur la partie droite de la Figure 6.

Ces diverses dispositions permettent de réaliser à l'avancement une conduite dans des conditions particulièrement avantageuses qui vont être décrites maintenant en se référant aux Figures 8, 9, 10 et 11 qui représentent, chacune schématiquement, les différentes étapes de construction d'une conduite selon l'un ou l'autre des modes de réalisation précédemment décrits.

La Figure 8 montre la construction d'une conduite dans le mode de réalisation le plus général représenté sur la Figure 1.

Pour réaliser une conduite enterrée, on ouvre d'abord la tranchée 10 sur une certaine longueur en ménageant un fond 11 aplani et tassé qui peut être recouvert d'un béton de propreté 15 ou d'une feuille de protection en tissu non tissé.

La dalle 2 est coulée à l'avancement en utilisant des moyens connus, par exemple pour la réalisation de chaussées bétonnées.

On pose d'abord le ferraillage 24 entre deux panneaux de coffrage latéral qui sont avantageusement constitués par les plaques de fixation 4, 4', elles-mêmes. Comme indiqué sur le Figure 7, celles-ci peuvent être maintenues par le ferraillage 24 au moyen d'organes de support 28. En outre, chaque nouvelle plaque 4 est fixée par son bord vertical arrière 44 sur le bord avant correspondant de la dernière plaque 4a scellée sur l'extrémité de la dalle déjà réalisée.

On coule alors la partie suivante de la dalle 2 entre les plaques 4, 4', puis l'on pose les plaques transversales 32 en soudant chacune, par son bord transversal arrière, sur la plaque précédente et par ses bords latéraux sur les plaques de fixation 4, 4'.

Les plaques 32, ainsi que les plaques 4, 4', peuvent être munies, sur leur face interne, de pattes de scellement assurant la solidarisation avec la dalle 2.

Après durcissement du béton, on assure, éventuellement, l'application sous pression des plaques 4, 4', sur les faces latérales de la dalle 2 au moyen de boulons d'ancrage ou de barres de tension 5.

On procède alors à la pose des éléments de voûte 33 sur la partie inférieure de l'enceinte ainsi réalisée.

Comme on l'a déjà indiqué, il est avantageux que les plaques 4, 4', s'étendent au-dessus du niveau de la face supérieure 22 de la dalle 2 car leurs parties supérieures 40 forment alors des rebords de centrage facilitant la pose de l'élément de voûte 33. Ce dernier est alors soudé sur le dernier élément de voûte déjà posé, le long d'un joint transversal ainsi que sur les plaques de fixation 4, 4', et, éventuellement, la plaque transversale 32, le long de ses extrémités latérales 31, 31'.

Au fur et à mesure de l'avancement de la construction, on peut enterrer la partie déjà posée sous le remblai 12 et creuser la tranchée sur une nouvelle longueur.

On notera que l'enceinte est constituée uniquement de la dalle coulée en place, à l'avancement, et de panneaux métalliques qui peuvent être facilement transportés sur le chantier. Ces panneaux peuvent être façonnés et formés en atelier ou bien sur place au moyen d'une cintreuse disposée à proximité du chantier ou même, directement, sur la dalle déjà bétonnée.

Un tel mode de réalisation est donc particulièrement rationnel et permet une pose rapide et sûre de l'enceinte tubulaire.

Bien entendu, diverses variantes peuvent être envisagées dans le cadre de l'invention.

Tout d'abord, comme on l'a représenté sur la Figure 1, chaque élément de voûte 3, prolongé tangentiellement par les deux plaques longitudinales 4, 4', peut être constitué en une seule pièce, éventuellement façonnée sur place.

Par ailleurs, s'il est avantageux d'utiliser comme coffrage les deux plaques longitudinales 4, 4', on peut aussi couler la dalle entre deux coffrages provisoires, comme on l'a représenté sur la Figure 9.

Après durcissement du béton, on pose sur la dalle 2 les plaques de fixation 4, 4' qui peuvent d'ailleurs être assemblées à l'avance avec la plaque transversale 32 pour former un caisson qui coiffe la dalle 2 et peut coulisser le long de celle-ci pour s'aligner avec le dernier élément 36a déjà posé. On réalise alors la soudure des bords en regard des panneaux latéraux 34, 34', et des plaques transversales 32.

On pose ensuite l'élément de voûte 33 en le soudant sur les bords supérieurs des panneaux latéraux 34, 34', et sur le bord antérieur du dernier élément de voûte 33a de la partie déjà posée.

Bien entendu, il peut être intéressant de réaliser la plaque transversale en deux parties 32, 32', de la façon indiquée sur la Figure 6.

Si les dimensions de l'élément de voûte 33 sont telles que l'on peut craindra une ovalisation de celui-ci à la pose, on peut utiliser un cintre provisoire 26 qui prend appui sur la dalle 2 et permet d'assurer le parfait raccordement des bords des éléments de voûte 3 et 3a.

On procède ensuite à la pose et à la mise sous tension des barres de précontrainte 5.

Dans ce cas, la résistance de la dalle 2 aux tassements différentiels est assurée par son ferraillage 24 et, le cas échéant, par des barres longitudinales de précontrainte.

On peut alors procéder à la mise en place du remblai 12.

Le même processus de pose peut être employé lorsque la partie métallique de chaque tronçon forme un ensemble monobloc comprenant la voûte 3 prolongée par les deux plaques de fixation 4, 4', et soudée à l'avance sur la plaque 32.

Mais, lorsque l'on utilise le mode de réalisation de la Figure 4, il est intéressant de couler la dalle à l'avancement, comme on l'a représenté sur la Figure 11.

Dans ce cas, après avoir creusé, sur une certaine longueur, la tranchée 10 et réalisé la surface de pose 11 en la recouvrant éventuellement d'un béton de propreté 15, on pose successivement les différents tronçons métalliques formant chacun un ensemble monobloc 37 constitué de la voûte 3 prolongée par les plaques de fixation 4, 4', dont les bords inférieurs sont reliés par la plaque inférieure 38.

Après avoir posé un élément 37, on réalise son alignement avec le dernier élément 37a de la partie métallique déjà posée, puis sa fixation par soudure. On a ainsi réalisé un tube métallique à base plane dont la partie inférieure peut constituer un coffrage perdu dans lequel on met en place un ferraillage 24, puis on coule le béton, par exemple au moyen d'une canalisation 27 alimentée par une pompe à béton.

La dalle 2 peut être constituée également d'éléments préfabriqués posés les uns à la suite des autres, notamment lorsqu'on utilise le mode de réalisation de la Figure 6 dans lequel les deux plaques longitudinales 4, 4', assemblées avec la plaque transversale 32, forment un coffrage perdu pour la coulée de l'éléments de dalle.

Un tel mode de construction a été représenté schématiquement sur la Figure 10.

Pour réaliser un nouveau tronçon de l'enceinte, on pose tout d'abord un élément de dalle 20 que l'on aligne avec le dernier élément 20a de la partie déjà réalisée et l'on soude entre eux les bords en regard des plaques 4, 4', et des plaques transversales 32 qui se trouvent placées dans le prolongement l'un de l'autre.

On procède alors à la pose et à la mise en tension des barres de précontrainte 5.

On pose enfin l'élément de voûte 3 et on le soude le long de ses bords inférieurs, sur les éléments de côté 34, 34', et, le long de son bord postérieur, sur le bord antérieur de l'élément de voûte 3a du dernier tronçon de la partie déjà posée de la conduite.

Lorsqu'une certaine longueur de conduite a été réalisée, on peut la recouvrir du remblai 12.

Ainsi, le processus de pose peut se poursuivre par étapes successives en creusant la tranchée 10 puis en la refermant au fur et à mesure de l'avancement de la conduite.

La liaison par soudure des parties métalliques des éléments successifs assure l'étanchéité de la conduite et la solidarisation des différents tronçons. Mais on peut aussi solidariser entre eux les éléments de dalle dans le sens longitudinal, par exemple par des barres de précontrainte longitudinales posées et mises en tension au fur et à mesure de l'avancement, pour assurer une meilleure solidarisation de la dalle lui permettant, en particulier, de résister aux tassements différentiels et d'éviter les risques de fissuration.

Un processus de pose analogue peut être utilisé dans le cas de la Figure 4 où la plaque transversale constitue la face inférieure de la dalle. Dans ce cas, il n'est plus nécessaire de retourner l'élément de dalle après la coulée du béton mais la face supérieure 22 de la dalle est alors directement au contact du fluide transporté.

Dans certains cas, d'ailleurs, comme celui de la Figure 1, on peut juger inutile de relier entre elles les extrémités latérales 31, 31', de la voûte par une plaque transversale. Il faut alors prévoir un moyen d'étanchéité entre les différents éléments de la dalle lorsque celle-ci est constituée d'éléments préfabriqués posés bout à bout.

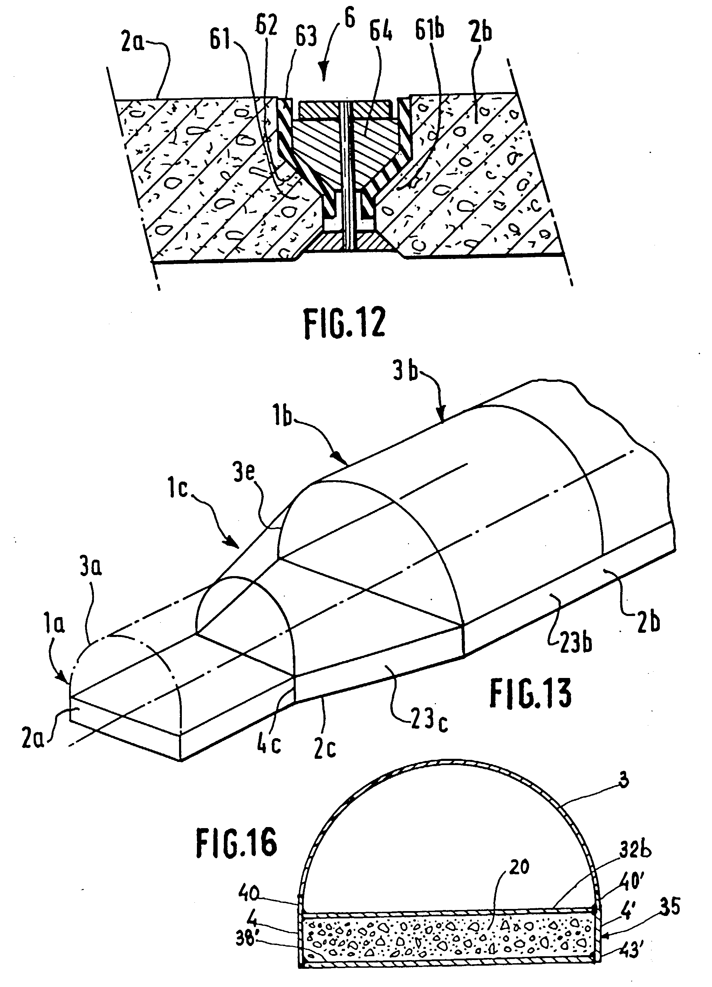

A titre d'exemple, on a représenté sur la Figure 12 un système d'étanchéité particulièrement intéressant.

Chaque joint d'étanchéité transversal 6 entre les extrémités longitudinales de deux éléments successifs 2a, 2b, de la dalle 2 est alors constitué par des parties en saillie 61 limitées par des faces inclinées 62, de façon que deux extrémités en saillie 61a, 61b, ménagent entre elles une rainure en V ouvert vers le haut. De plus, les deux faces 62a, 62b, sont recouvertes d'une feuille d'étanchéité en matière déformable 63.

Après la pose des deux éléments successifs 2a, 2b, de la dalle 2, on introduit dans la rainure en V ainsi formée une pièce transversale formant coin 64 de forme conjuguée à celle des faces 62a, 62b, et l'on serre le coin 64 par des moyens faciles à concevoir, par exemple des tiges filetées prenant appui d'un côté sur le coin et de l'autre sur les deux éléments 2a, 2b.

On peut ainsi réaliser une excellente étanchéité entre deux éléments de dalle successifs, 2a, 2b, même en l'absence d'une tôle métallique.

Mais on pourrait aussi imaginer d'autres variantes ou perfectionnements sans s'écarter du cadre de protection défini par les revendications.

Par exemple, il est possible de réaliser facilement des changements progressifs de section de la façon représentée sur la Figure 13.

La conduite la constituée d'une dalle 2a et d'une voûte 3a se raccorde, dans ce cas, à une conduite 1b constituée d'une dalle 2b de plus grande largeur et d'une voûte 3b de plus grand diamètre par une partie intermédiaire lc. Celle-ci est constituée d'une dalle 2c dont les faces latérales 23c s'écartent progressivement pour se raccorder aux faces latérales 23b de la dalle 2b. De même, la voûte 3c a une forme légèrement tronconique pour assurer la jonction entre les voûtes 3a et 3b de diamètres différents. Cependant, comme dans les autres cas, la voûte 3c est prolongée par des plaques de fixation 4c qui s'appliquent sur les faces latérales 23c de la dalle 2c.

On voit que tous les modes de réalisation qui ont été décrits précédemment peuvent s'appliquer à l'élément tronconique lc.

Une telle disposition permet ainsi d'augmenter ou de diminuer progressivement la section de passage de la conduite, mais pourra aussi être employée pour changer la hauteur et la largeur de la voûte en conservant la section de passage, par exemple pour respecter un niveau maximal ou minimal ou bien pour passer dans un espace resserré.

Par ailleurs, dans tous les modes de réalisation décrits précédemment, on a donné à l'enceinte une section demi-circulaire pour obtenir une résistance optimale à l'écrasement, mais ceci n'est pas indispensable, d'autres sections pouvant être avantageuses dans certains cas.

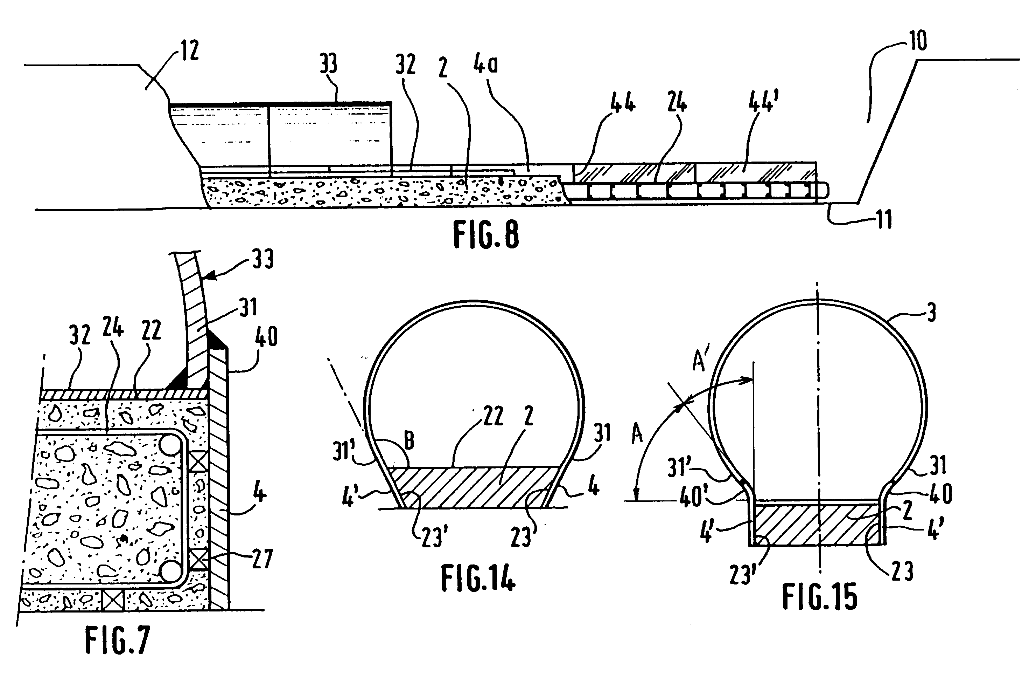

Par exemple, dans le cas des Figures 14 et 15, la voûte métallique 3 forme un arc surpassé, la face supérieure 22 de la dalle 2 se trouvant écartée vers le bas par rapport à l'axe de la section circulaire. Une telle disposition peut être avantageuse pour les très grandes sections car elle permet de diminuer la largeur de la dalle en béton et, par conséquent, de l'alléger, les efforts de flexion étant moins importants.

Dans le cas de la Figure 14, les plans tangents à la voûte 3 le long de ses extrémités latérales 31, 31', forment des dièdres obtus B avec la face supérieure 22 de la dalle 2 et les faces latérales 23, 23', de la dalle sont inclinées du même angle de façon que les plaques de fixation 4, 4', qui s'étendent tangentiellement dans le prolongement des extrémités latérales 31, 31', s'appliquent chacune sur les faces inclinées 23, 23'.

Dans le cas de la Figure 15, les faces latérales 23, 23', de la dalle 2 restent verticales, mais chaque plaque longitudinale 4, 4', comporte une partie inférieure plane appliquée de l'extérieur contre la face latérale 23, 23', et une partie supérieure 40, 40', incurvée vers l'extérieur de façon à se raccorder tangentiellement à l'extrémité latérale correspondante 31, 31', de la voûte 3.

On voit que les différents modes de réalisation décrits précédemment sont applicables aux cas des Figures 14 et 15 et procurent les mêmes avantages.

L'invention, telle qu'elle vient d'être décrite, trouvera de multiples applications, non seulement pour la réalisation de conduites de transport de fluide sous pression, enterrées ou non, mais également pour la construction de chambres de détente ou d'amortissement sur des réseaux hydrauliques ou pneumatiques, pour le stockage de gaz ou de fluides sous pression et, d'une façon générale, dans toutes les circonstances où une enceinte allongée peut être soumise simultanément ou alternativement à des sollicitations internes ou externes.

Par ailleurs, tous les modes de réalisation décrits précédemment s'appliquent aux cas où la conduite repose sur une surface de pose préalablement aménagée, même si l'utilisation d'une dalle en béton permet d'absorber, le cas échéant, des tassements différentiels.

Mais on pourrait encore étendre les applications de l'invention en utilisant le mode de réalisation représenté sur la Figure 16 qui est une vue en coupe transversale d'une enceinte ainsi perfectionnée.

Dans ce cas, les deux plaques longitudinales 4, 4', sont en effet reliées entre elles par deux plaques transversales écartées l'une de l'autre, respectivement une plaque inférieure 38' fixée sur les bords inférieurs 43, 43', et une plaque supérieure 32' fixée sur les extrémités supérieures 40, 40', des deux plaques longitudinales 4, 4'.

L'ensemble des deux plaques longitudinales 4, 4' et des plaques transversales 32', 38' , forme un caisson fermé 35 à section rectangulaire qui est rempli de béton 20 de façon à constituer la dalle.

Il faut noter qu'aucune armature métallique n'est nécessaire, le béton 20 étant simplement coulé de façon à remplir intégralement le caisson 35 en adhérant parfaitement aux quatre plaques métalliques qui le limitent. A cet effet, le béton 2 est avantageusement coulé de façon à laisser subsister une légère pression après durcissement et retrait éventuel. En outre, les faces internes des quatre plaques peuvent être munies de moyens tels que des stries ou des redans pour améliorer l'adhérence.

On peut réaliser le caisson métallique 35 à l'avancement sur une certaine longueur, comme dans le cas de la Figure 11, le béton étant injecté à l'intérieur du caisson 35 sous une certaine pression.

On peut aussi réaliser à l'avance des tronçons préfabriqués d'une façon analogue à celle qui a été décrite en se référant à la Figure 10. Dans ce cas, quatre plaques 4, 4', 32', 38' , de même longueur sont d'abord assemblées et soudées de façon à former un caisson dans lequel est coulé le béton sous une légère pression. Après durcissement, les éléments de dalle préfabriqués ainsi réalisés sont mis en place successivement l'un à la suite de l'autre, en soudant les bords postérieurs des quatre plaques du nouvel élément sur les bords antérieurs du dernier élément déjà posé. On peut, après la soudure, injecter sous pression un mortier dans le joint transversal entre deux éléments de dalle successifs.

D'une façon générale, on met en oeuvre, dans ce mode de réalisation, la technique dite du "béton confiné" qui permet d'obtenir de multiples avantages.

En particulier, aucun ferraillage ne doit être incorporé à l'intérieur de la dalle en béton, celle-ci étant armée par les parois métalliques du caisson. Il en résulte que la dalle 2 peut résister, dans le sens longitudinal, à des moments de flexion aussi bien négatifs que positifs, les caractéristiques, et notamment les épaisseurs des plaques étant simplement adaptées aux contraintes supportées.

Ainsi, une telle conduite peut reposer sur des appuis écartés et non pas seulement sur une surface de pose continue. Ce mode de réalisation pourra donc avantageusement être utilisé dans le cas de conduites forcées, en montagne, mais aussi chaque fois que le sol ne permet pas de ménager une surface d'assise résistante, par exemple sur le fond d'une rivière ou, d'une façon générale, pour franchir un espace libre entre deux appuis.

On notera que, dans ce cas, la plaque inférieure 38' , qui sert d'armature et est soumise à des efforts de traction importants, sera normalement plus épaisse que la plaque supérieure 32' destinée à fermer le caisson et à assurer l'étanchéité.

Les signes de référence, insérés après les caractéristiques techniques mentionnées dans les revendications, ont pour seul but de faciliter la compréhension de ces dernières et n'en limitent aucunement la portée.

## Revendications

1. Enceinte allongée (1) destinée à supporter une pression interne pouvant dépasser 10 bars et formant un espace tubulaire fermé étanche à section transversale tronquée, s'étendant suivant un axe longitudinal, ladite enceinte (1) étant constituée d'une partie inférieure formée d'une dalle rigide (2) en béton armé susceptible de résister à la flexion résultant de la pression interne comportant une face inférieure (21) reposant sur le sol, une face supérieure (22) et deux faces latérales (23) parallèles à l'axe longitudinal, et d'une partie supérieure (3) constituée d'une paroi métallique mince en forme de voûte incurvée s'étendant entre deux extrémités latérales (31) (31') parallèles à l'axe longitudinal et reliées à la dalle (2), chacune par une pièce longitudinale de jonction ayant une partie supérieure qui se raccorde tangentiellement à l'extrémité latérale (31, 31') de la voûte (3) et une partie inférieure fixée sur la dalle (2),
caractérisée par le fait que la face supérieure (22) de la dalle (2) a une largeur sensiblement égale à l'écartement entre les deux extrémités latérales (31) (31') de la voûte incurvée (3) et que chaque pièce de jonction est constituée par une plaque plane (4) (4') appliquée de l'extérieur contre la face latérale correspondante (23) (23') de la dalle (2) et associée à des moyens de maintien (5) (42) susceptibles de s'opposer au ripage de ladite plaque (4) (4') le long de la face latérale (23) (23') correspondante de la dalle (2) sous l'effet des efforts (15) dûs à la pression interne, et au décollement desdites plaques (4) (4') sous l'effet des sollicitations externes (13).

2. Enceinte allongée selon la revendication 1, caractérisée par le fait que chaque plaque longitudinale 4, 4', de fixation de la voûte 3 est appliquée contre la face latérale correspondante 23, 23', de la dalle 2 sous une pression au moins suffisante pour s'opposer par frottement au ripage de la plaque.

3. Enceinte allongée selon la revendication 2, caractérisée par le fait que les moyens de maintien des deux plaques longitudinales (4, 4') de fixation de la voûte (3) contre les faces latérales (23, 23') de la dalle (2) sont constitués par une pluralité de barres transversales de tension (5) réparties sur toute la longueur de l'enceinte et s'étendant chacune sur toute la largeur de la dalle (2), en traversant les deux plaques (4, 4') et la dalle (2), chaque barre (5) étant munie, à chaque extrémité, d'un moyen extérieur (52) d'appui sur la plaque (4, 4') correspondante, lesdites barres (5) étant soumises à une tension permettant d'assurer simultanément la résistance de la dalle aux efforts de flexion dûs à la pression interne et l'application de chaque plaque de fixation (4, 4') sur la face latérale correspondante (23)(23') de la dalle (2) sous une pression suffisante pour s'opposer par frottement au ripage de la plaque.

4. Enceinte allongée selon l'une des revendications 1 à 3, caractérisée par le fait qu'un cordon d'étanchéité (26) est interposé entre chaque plaque de fixation (4, 4') et la face latérale (23, 23') de la dalle (2) sur laquelle elle est appliquée.

5. Enceinte allongée selon l'une des revendications 1 à 3, caractérisée par le fait que les deux extrémités latérales (31, 31') de la voûte (3) sont reliées entre elles par une plaque transversale (32) de fermeture étanche de l'espace tubulaire (A), recouvrant l'une des faces horizontales, respectivement supérieure ou inférieure, de la dalle (2) et comportant deux bords longitudinaux parallèles fixés rigidement et de façon étanche, respectivement le long de chaque extrémité latérale (31, 31') de la voûte (3).

6. Enceinte allongée selon la revendication 5, caractérisée par le fait que la plaque transversale (32) est constituée de deux parties séparées (32a, 32b) soudées respectivement chacune le long de l'une des extrémités latérales (31, 31') de la voûte (3) et se recouvrant partiellement de façon à permettre un léger rapprochement des plaques latérales de fixation (4, 4'), lesdites parties (32a, 32b) de la plaque transversale étant soudées après stabilisation.

7. Enceinte allongée selon l'une des revendications 5 et 6, caractérisée par le fait que la plaque transversale (32) est munie, sur sa face tournée vers la dalle, de parties de solidarisation en saillie scellées dans la dalle (2).

8. Enceinte allongée selon l'une des revendications précédentes, caractérisée par le fait que chaque plaque de fixation (4, 4') est munie sur sa face interne tournée vers la dalle (2), d'au moins une partie d'accrochage en saillie (42) coopérant avec au moins une partie en creux conjuguée (25), ménagée au niveau voulu sur la face latérale (23) correspondante de la dalle (2).

9. Enceinte allongée selon la revendication 8, caractérisée par le fait que les parties d'accrochage (42) sont constituées de nervures ménagées sur les faces internes des plaques de fixation (4) parallèlement à l'axe longitudinal et susceptibles de s'engager dans des rainures (25) de forme en creux conjuguée, ménagées sur les faces latérales (23) de la dalle (2).

10. Enceinte allongée selon l'une des revendications précédentes, caractérisée par le fait que la voûte (3) étant constituée de tronçons longitudinaux préfabriqués (3a, 3b) placés les uns à la suite des autres, chaque tronçon de voûte (3) est formé en une seule pièce comprenant une partie centrale en forme de demi-coquille constituant la voûte (3) proprement dite et prolongée, sur chaque côté, par une partie sensiblement plane constituant la plaque de fixation (4, 4').

11. Enceinte allongée selon la revendication 5, caractérisée par le fait que, la voûte étant constituée de tronçons préfabriqués (3a, 3b), placés les uns à la suite des autres, les deux plaques latérales (4, 4') de chaque tronçon sont soudées à l'avance sur la plaque transversale (32) de façon à constituer un ensemble préfabriqué susceptible d'être placé séparément sur la dalle (2), l'élément de voûte (33) étant soudé le long de ses bords latéraux (31, 31') sur les extrémités supérieures (40, 40') desdites plaques latérales (4, 4').

12. Enceinte allongée selon l'une des revendications précédentes, caractérisée par le fait que la voûte (3) couvre sensiblement un demi-cercle centré sensiblement au niveau de la face supérieure (22) de la dalle (2).

13. Enceinte allongée selon l'une des revendications 1 à 11, caractérisée par le fait que la voûte (3) couvre un secteur sensiblement circulaire centré au-dessus de la face supérieure (22) de la dalle (2), les plans tangents à la voûte (3) le long de ses extrémités latérales (31, 31') formant des dièdres obtus (B) avec ladite face supérieure (22) de la dalle (2).

14. Enceinte allongée selon la revendication 13, caractérisée par le fait que les faces latérales (23, 23') de la dalle (2) sont inclinées par rapport à la face supérieure (22) d'un angle égal à celui des plans tangents aux naissances (31, 31') de la voûte (3) et que les plaques de fixation (4, 4') s'étendent chacune le long du plan tangent correspondant.

15. Enceinte allongée selon la revendication 13, caractérisée par le fait que, les faces latérales (23, 23') de la dalle (2) étant parallèles et sensiblement verticales, chaque plaque de fixation (4, 4') est munie à son extrémité supérieure d'une partie incurvée (40, 40') dont le bord supérieur fait avec la plaque (4, 4') un angle (A') complémentaire de l'angle (A) d'inclinaison du plan tangent à la naissance de la voûte (3) de façon à se raccorder tangentiellement au bord latéral (31, 31') de celle-ci.

16. Enceinte allongée selon l'une des revendications précédentes, caractérisée par le fait que les bords inférieurs des plaques longitudinales (4, 4'), sont reliés par une plaque transversale (33) constituant la partie inférieure de l'enceinte reposant sur la surface de pose, la dalle en béton (2) étant coulée à l'intérieur du coffrage ainsi constitué par ladite plaque transversale (33) et les deux plaques longitudinales (4, 4').

17. Enceinte allongée selon la revendication 16, caractérisée par le fait que les plaques longitudinales (4, 4') sont reliées par deux plaques transversales parallèles, respectivement une plaque (33) de liaison entre les bords inférieurs (43, 43') et une plaque (32) de liaison entre les extrémités supérieures (40, 40') des plaques longitudinales (4, 4'), l'ensemble des deux plaques transversales (32), (33) et des deux plaques longitudinales (4) (4') constituant un caisson 35 fermé en section transversale, à l'intérieur duquel est coulé du béton (20) pour former une dalle (2) dont l'armature est constituée par la paroi métallique dudit caisson (35).

18. Procédé de réalisation d'une enceinte allongée (1) comprenant une partie inférieure constituée d'une dalle rigide plane (2) en béton armé comportant une face inférieure (21) reposant sur le sol, une face supérieure (22) et deux faces latérales (23, 23') parallèles à l'axe longitudinal, et une partie supérieure métallique en forme de voûte (3) constituée d'une paroi mince incurvée en forme de secteur cylindrique s'étendant entre deux extrémités latérales (31, 31') fixées sur ladite dalle (2),
caractérisé par le fait que l'on réalise à l'avancement, au moins sur une certaine longueur, une dalle continue (2) en béton coulé en place et dans lequel est incorporé un ferraillage, ladite dalle (2) étant coulée entre deux coffrages plans dont l'écartement, au moins au niveau de la face supérieure de la dalle, est sensiblement égal à l'écartement entre les extrémités latérales du secteur cylindrique , et que, pour réaliser chaque tronçon de la partie supérieure métallique, on applique sur les faces latérales (23, 23') de la dalle (2), deux plaques longitudinales (4, 4') que l'on soude sur les extrémités des plaques longitudinales adjacentes déjà posées et l'on pose le tronçon de voûte (33) en le soudant, d'une part, le long du joint transversal avec le tronçon de voûte (33a) posé précédemment et, d'autre part, sur les extrémités supérieures (40, 40') des plaques longitudinales (4, 4') et l'on met en place des moyens (5) de maintien des plaques longitudinales (4,4') sur les faces latérales (23,23') de la dalle (2) sous une pression suffisante pour assurer la solidarisation de la voûte (3) avec la dalle (2).

19. Procédé de réalisation d'une enceinte allongée selon la revendication 18, caractérisé par le fait que l'on forme chaque tronçon de la partie supérieure en une seule pièce comprenant une voûte cylindrique (3) prolongée, à chaque extrémité latérale (31, 31'), par une plaque longitudinale (4, 4') et que l'on pose ledit tronçon en appliquant les plaques (4, 4') contre les faces latérales (23, 23') de la dalle (2), on soude le tronçon le long du joint transversal avec le tronçon précédemment posé et l'on fixe alors les plaques longitudinales (4, 4') sur la dalle (2).

20. Procédé de réalisation d'une enceinte allongée selon la revendication 18, caractérisé par le fait que l'on met en place, au moins sur une certaine longueur, les plaques longitudinales (4, 4') en même temps que le ferraillage de façon que lesdites plaques (4, 4') constituent des coffrages latéraux entre lesquels est coulée la dalle (2) en béton.

21. Procédé de réalisation d'une enceinte allongée (1) comprenant une partie inférieure constituée d'une dalle rigide plane (2) en béton armé, comportant une face inférieure (21) reposant sur le sol, une face supérieure (22) et deux faces latérales (23 23') parallèles à l'axe longitudinal, et une partie supérieure métallique en forme de voûte constituée d'une paroi mince incurvée (3) dont les deux extrémités latérales (31, 31') sont fixées sur la dalle (2),
caractérisé par le fait que, l'enceinte (1) étant constituée de tronçons préfabriqués placés les uns à la suite des autres le long d'un axe longitudinal, on réalise, d'une part, des ensembles de jonction (36) entre la dalle et la partie supérieure comprenant chacun deux plaques longitudinales parallèles (4, 4') reliées entre elles par une plaque transversale supérieure (32) et, d'autre part, des éléments de voûte (33) constitués chacun d'une paroi incurvée susceptible de se raccorder tangentiellement aux plaques longitudinales (4, 4'), que l'on utilise chaque ensemble de jonction (36) comme un coffrage dans lequel on moule la partie correspondante de la dalle (2) et que, après avoir réalisé une surface de pose (11), on met en place d'abord les ensembles (20) constitués chacun d'un ensemble de jonction (36) associé à un élément de dalle (2), on réalise l'alignement avec les éléments (20a) déjà posés puis la soudure des bords en regard des plaques longitudinales (4, 4') et des plaques transversales (32), puis on pose chaque élément de voûte (33) sur l'ensemble (20) correspondant en le soudant le long de ses extrémités latérales (31, 31') avec les plaques longitudinales (4, 4') et le long d'un joint transversal avec l'élément de voûte adjacent (33a) déjà en place.

22. Procédé de réalisation d'une enceinte allongée (1) comprenant une partie inférieure constituée d'une dalle rigide plane (2) en béton comprenant un ferraillage (24) comportant une face inférieure (21) reposant sur le sol, une face supérieure (22) et deux faces latérales (23, 23') parallèles à l'axe longitudinal, et une partie supérieure métallique en forme de voûte constituée d'une paroi mince incurvée (3) dont les deux extrémités latérales (31, 31') sont fixées sur la dalle (2),
caractérisé par le fait que la partie métallique de l'enceinte (1) est constituée de tronçons préfabriqués (37) comprenant chacun une paroi incurvée (3) prolongée par deux plaques longitudinales (4, 4') et dont les bords inférieurs (43) sont reliés par une plaque transversale inférieure (38) et que, après avoir aménagé une surface de pose (11), on pose d'abord lesdits tronçons métalliques, chaque tronçon (37) reposant sur la plaque transversale (38) constituant sa partie inférieure, on soude entre eux lesdits tronçons (37) au moins sur une certaine longueur, on pose le ferraillage (24) et l'on coule la dalle (2) en béton dans le coffrage ainsi constitué par la partie inférieure de l'enceinte (1).

23. Procédé de réalisation d'une enceinte (1) selon l'une des revendications 18 à 22, caractérisé par le fait que l'on réalise l'application des plaques longitudinales (4, 4') au moyen de barres de précontrainte (5) régulièrement espacées et passant dans des canaux (53) ménagés dans la dalle (2) transversalement à l'axe longitudinal, lesdites barres (5) étant mises sous une tension de précontrainte susceptible d'assurer simultanément la résistance à la flexion de la dalle (2) et le maintien des plaques longitudinales (4, 4') sur les faces latérales (23, 23').

24. Procédé de réalisation d'une enceinte allongée (1) selon l'une des revendications 18 à 23, caractérisé par le fait que la plaque transversale est constituée de deux parties séparées (32a, 32b) soudées, respectivement, chacune le long de l'une des extrémités latérales de la voûte (3) et s'étendant l'une vers l'autre en se recouvrant partiellement de façon à permettre un léger rapprochement des plaques longitudinales (4, 4') pour leur fixation sur la dalle (2), les deux parties de la plaque transversale étant soudées après stabilisation.

25. Procédé de réalisation d'une enceinte allongée (1) comprenant une partie inférieure constituée d'une dalle rigide plane (2) en béton armé, comportant une face inférieure (21), une face supérieure (22) et deux faces latérales (23, 23') parallèles à l'axe longitudinal, et une partie supérieure métallique en forme de voûte constituée d'une paroi mince incurvée (3) dont les deux extrémités latérales (31, 31') sont fixées sur la dalle (2),
caractérisé par le fait que, l'enceinte (1) étant constituée de tronçons préfabriqués placés les uns à la suite des autres le long d'un axe longitudinal, on réalise des éléments de dalle préfabriqués comprenant chacun deux plaques longitudinales parallèles (4, 4') reliées entre elles par deux plaques transversales parallèles, respectivement inférieure (38') et supérieure (32') écartées l'une de l'autre de façon à limiter un caisson (35) fermé en section transversale dans lequel est coulé un béton (20) sous une pression suffisante pour bien adhérer aux faces internes des plaques (4, 4', 32', 38') et que, pour réaliser l'enceinte allongée sur une certaine longueur, on met en place lesdits éléments de dalle (2) les uns à la suite des autres en soudant chaque caisson métallique (35) sur le caisson adjacent déjà posé, le long de leurs bords correspondants, on injecte sous pression un mortier dans chaque joint transversal entre deux éléments de dalle, puis l'on met en place sur la dalle continue ainsi formée des éléments de voûte (33) constitués chacun d'une paroi incurvée de façon à se raccorder tangentiellement aux extrémités supérieures (40, 40') des plaques longitudinales (4, 4') et l'on soude chaque élément de voûte (33) sur l'élément de voûte adjacent (33a) déjà posé le long de leurs bords en regard et sur les extrémités supérieures (40, 40') des plaques longitudinales (4, 4'), le long de ses extrémités latérales (31, 31').

## Patentansprüche

1. Langgestrecktes, sich entlang einer Längsachse erstrekkendes rohrförmiges Gebilde (1), geeignet zum Standhalten eines 10 bar übersteigendkönnenden Innendruckes und das einen geschlossenen, dichten und rohrförmigen Raum mit einem abgestumpften Querschnitt bildet, wobei dieses Gebilde (1) aus einem Unterteil, das aus einer starren Stahlbetonplatte (2) mit einer dem Innendruck standhaltenden Biegefestigkeit, und mit einer auf dem Boden aufliegenden Unterseite (2), einer Oberseite (22) und zwei zur Längsachse parallelen Seitenflächen (23) gebildet ist, und einem Oberteil (3), das aus einer als gekrümmtes Gewölbe ausgebildeten Metallwand gebildet ist, die zwischen zwei zur Längsachse parallelen Seitenenden (31, 31') verläuft, die mit der Bodenplatte (2) jeweils über ein längsgerichtetes Verbindungselement verbunden sind, das ein sich tangential an das Seitenende (31, 31') des Gewölbes (3) anschliessendes Oberteil und ein auf der Bodenplatte (2) befestigtes Unterteil aufweist, besteht, dadurch gekennzeichnet, dass die Oberfläche (22) der Bodenplatte (2) eine im wesentlichen dem Abstand zwischen den beiden Seitenenden (31) (31') des gekrümmten Gewölbes entsprechende Breite aufweist, und dass jedes Verbindungselement aus einer ebenen Platte (4) (4') besteht, die von aussen gegen die entsprechende Seitenfläche (23) (23') der Bodenplatte (2) angedrückt wird und welcher Haltemittel (5) (42) zugeordnet sind, die sich dem Verschieben dieser Platte (4) (4') entlang der entsprechenden Seitenfläche (23) (23') der Bodenplatte (2) unter der Wirkung der durch den Innendruck (15) erzeugten Kräfte und dem Abheben dieser Platten (4) (4') unter der Wirkung der äusseren Beanspruchungen (13) widersetzen können.

2. Langgestrecktes Gebilde nach Anspruch 1, dadurch gekennzeichnet, dass jede längsverlaufende Befestigungsplatte (4, 4') des Gewölbes (3) gegen die entsprechende Seitenfläche (23, 23') der Bodenplatte (2) mit mindestens einem ausreichenden Druck zur Anlage kommt, um dem Verschieben der Platte durch Reibung entgegenzuwirken.

3. Langgestrecktes Gebilde nach Anspruch 2, dadurch gekennzeichnet, dass die Haltemittel der beiden längsverlaufenden Befestigungsplatten (4, 4') des Gewölbes (3) an den Seitenflächen (23, 23') der Bodenplatte (2) aus einer Mehrzahl über die gesamte Länge des Gebildes verteilten quergerichteten Zugstangen (5) bestehen, die unter Durchquerung der beiden Platten (4, 4') und der Bodenplatte (2) sich jeweils über die gesamte Breite der Bodenplatte (2) erstrecken, wobei jede Zugstange (5) an jedem Ende ein externes Abstützungsmittel (52) auf der entsprechenden Platte (4, 4') aufweist, und wobei diese Stangen (5) mit einer Spannung beaufschlagt werden, damit gleichzeitig der Widerstand der Bodenplatte gegen die durch den Innendruck erzeugten Biegekräfte und die Anlage der jeweiligen Befestigungsplatte (4, 4') an der entsprechenden Seitenfläche (23, 23') der Bodenplatte (2) mit einem ausreichenden Druck gewährleistet ist, um einem Verschieben der Platte durch Reibung entgegenzuwirken.

4. Langgestrecktes Gebilde nach einem der Ansprüche 1 bis 3, dadurch gekennzeichnet, dass zwischen jeder Befestigungsplatte (4, 4') und der Seitenfläche (23, 23') der Bodenplatte (2) eine auf dieser aufgedrückten Dichtungsschnur (26) dazwischengeschaltet ist.

5. Langgestrecktes Gebilde nach einem der Ansprüche 1 bis 3, dadurch gekennzeichnet, dass die beiden Seitenenden (31, 31') des Gewölbes (3) durch eine den rohrförmigen Raum (A) dicht verschliessende Querplatte (32) miteinander verbunden sind, welche je eine obere bzw. untere waagerechte Fläche der Bodenplatte (2) abdeckt und zwei parallele Längskanten aufweist, welche entlang des jeweiligen Seitenendes (31, 31') des Gewölbes (3) starr und dicht befestigt sind.

6. Langgestrecktes Gebilde nach Anspruch 5, dadurch gekennzeichnet, dass die Querplatte (32) aus zwei getrennten Teile (32a, 32b) besteht, die jeweils entlang einer der Seitenenden (31, 31') des Gewölbes (3) angeschweisst werden und sich teilweise überdecken, sodass eine geringfügige Annäherung der seitlichen Befestigungsplatten (4, 4') ermöglicht wird, wobei nach einer Stabilisierung diese Teile (32a, 32b) der Querplatte geschweisst werden.

7. Langgestrecktes Gebilde nach einem der Ansprüche 5 und 6, dadurch gekennzeichnet, dass die Querplatte (32) an deren zur Bodenplatte hin gerichteten Seite vorspringende, in der Bodenplatte (2) verankerte Befestigungselemente aufweist.

8. Langgestrecktes Gebilde nach einem der vorangehenden Ansprüche, dadurch gekennzeichnet, dass jede Befestigungsplatte (4, 4') an ihrer zur Bodenplatte (2) hin gerichteten Innenseite mindestens ein vorspringendes Verankerungsteil (42) aufweist, das mindestens mit einem in der gewünschten Höhe auf der entsprechenden Seitenfläche (23) der Bodenplatte (2) angeordneten, vertieft ausgebildeten konjugierten Teil (25) zusammenwirkt.

9. Langgestrecktes Gebilde nach Anspruch 8, dadurch gekennzeichnet, dass die Verankerungsteile (42) aus an den Innenseiten der Befestigungsplatten (4) parallel zur Längsachse angeordneten Rippen bestehen, die in an den Seitenflächen (23) der Bodenplatte (2) angeordneten, eine vertieft ausgebildete konjugierte Form aufweisende Rillen (25) eingreifen können.

10. Langgestrecktes Gebilde nach einem der vorangehenden Ansprüche, dadurch gekennzeichnet, dass jeder Abschnitt des Gewölbes (3) aus einem einzigen Teil besteht, das ein halbschalenförmig ausgebildetes, das eigentliche Gewölbe (3) bildende Mittelteil, das beidseitig durch ein im wesentlichen ebenes, die Befestigungsplatte (4, 4') bildendes Teil verlängert ist, aufwest, wobei das Gewölbe (3) aus vorgefertigten, hintereinander angeordneten Längsabschnitte (3a, 3b) besteht.

11. Langgestrecktes Gebilde nach Anspruch 5, dadurch gekennzeichnet, dass die beiden Seitenplatten (4, 4') von jedem Abschnitt vorab an die Querplatte (32) zur Bildung einer auf der Bodenplatte (2) getrennt anzuordnenden vorgefertigen Einheit geschweisst werden, wobei das Gewölbeteil (33) entlang dessen Seitenkanten (31, 31') an die oberen Enden (40, 40') dieser Seitenplatten (4, 4') geschweisst wird, und wobei das Gewölbe (3) aus vorgefertigten, hintereinander angeordneten Längsabschnitte (3a, 3b) besteht.

12. Langgestrecktes Gebilde nach einem der vorangehenden Ansprüche, dadurch gekennzeichnet, dass das Gewölbe (3) im wesentlichen einen hauptsächlich auf die Oberfläche (22) der Bodenplatte (2) zentrierten Halbkreis abdeckt.

13. Langgestrecktes Gebilde nach einem der Ansprüche 1 bis 11, dadurch gekennzeichnet, dass das Gewölbe (3) ein im wesentlichen kreisförmigen, über der Oberfläche (22) der Bodenplatte (2) zentrierten Sektor abdeckt, wobei die zum Gewölbe (3) entlang dessen Seitenenden (31, 31') verlaufenden Tangentialebenen mit dieser Oberfläche (22) der Bodenplatte (2) stumpfe Dieder (B) bilden.

14. Langgestrecktes Gebilde nach Anspruch 13, dadurch gekennzeichnet, dass die Seitenflächen (23, 23') der Bodenplatte (2) zur Oberfläche (22) einen Neigungswinkel aufweisen, welcher demjenigen der Ebenen entspricht, die zu den Füssen (31, 31') des Gewölbes (3) tangieren, und dass die Befestigungsplatten (4, 4') jeweils entlang der entsprechenden Tangentialebene verlaufen.

15. Langgestrecktes Gebilde nach Anspruch 13, dadurch gekennzeichnet, dass jede Befestigungsplatte (4, 4') an ihrem oberen Ende ein gekrümmtes Teil (40, 40') aufweist, dessen Oberkante mit der Befestigungsplatte (4, 4') ein den Neigungswinkel (A) ergänzenden Winkel (A') der zum Fuss des Gewölbes (3) tangierenden Ebene bildet, um sich tangential an die Seitenkante (31, 31') des Gewölbes anzuschliessen, wobei die Seitenflächen (23, 23') der Bodenplatte (2) parallel und im wesentlichen senkrecht sind.

16. Langgestrecktes Gebilde nach einem der vorangehenden Ansprüche, dadurch gekennzeichnet, dass die Unterkanten der Längsplatten (4, 4') über eine Querplatte (33) verbunden sind, die das auf der Verlegungsfläche sich abstützende Gebildeunterteil bildet, wobei die Betonplatte (2) in die durch diese Querplatte (33) und die beiden Längsplatten (4, 4') gebildete Schalung gegossen wird.

17. Langgestrecktes Gebilde nach Anspruch 16, dadurch gekennzeichnet, dass die Längsplatten (4, 4) über zwei parallele Querplatten, je eine Verbindungsplatte (33) zwischen den Unterkanten (43, 43') und eine Verbindungsplatte (32) zwischen den oberen Enden (40, 40') der Längsplatten (4, 4) miteinander verbunden sind, wobei die beiden Querplatten (32, 33) und die beiden Längsplatten (4, 4') zusammen einen im Querschnitt geschlossenen Kasten (35) bilden, in welchen Beton (20) zur Bildung einer Platte (2) gegossen wird, deren Armierung aus der Metallwand dieses Kastens (35) besteht.

18. Verfahren zur Ausführung eines langgestreckten rohrförmigen Gebildes (1), das aus einem Unterteil, welches aus einer ebenen starren Stahlbetonplatte (2) mit einer auf dem Boden aufliegenden Unterseite (21), einer Oberseite (22) und zwei zur Längsachse parallelen Seitenflächen (23, 23') gebildet ist, und aus einem oberen als Gewölbe (3) ausgebildetes Metallteil besteht, das aus einer gekrümmten, als Bogenstück ausgebildeten dünnen Wand besteht, die zwischen zwei auf dieser Platte (2) befestigten Seitenenden (31, 31') verläuft, dadurch gekennzeichnet, dass im Arbeitsgang mindestens über eine bestimmte Länge eine vor Ort gegossene durchgehende Betonplatte (2) mit einer eingelassenen Armierung hergestellt wird, wobei diese Platte (2) zwischen zwei ebenen Schalungen gegossen wird, deren Abstand mindestens an der Plattenoberseite im wesentlichen dem Abstand zwischen den Seitenenden des Bogenstückes entspricht, und dass zur Ausführung jeweils des oberen Metallteilabschnittes zwei Längsplatten (4, 4') an die Seitenflächen (23, 23') der Platte (2) angeordnet werden, welche mit den Enden der bereits angebrachten benachbarten Längsplatten verschweisst werden, und dass der Gewölbeabschnitt (33) eingesetzt wird, der einerseits entlang der Querfuge mit dem vorher eingesetzten Gewölbeabschnitt (33a) und anderseits an den oberen Enden (40, 40') der Längsplatten (4, 4') verschweisst wird, und Haltemittel (5) der Längsplatten (4, 4') an den Seitenflächen (23, 23') der Platte (2) mit einem zum Zusammenbau des Gewölbes (3) mit der Bodenplatte (2) ausreichenden Druck montiert werden.

19. Verfahren zur Ausführung eines langgestreckten Gebildes nach Anspruch 18, dadurch gekennzeichnet, dass jeder Oberteilabschnitt als ein einziges Teil ausgeführt wird, das aus einem durch eine Längsplatte (4, 4') an jedem Seitenende (31, 31') verlängerten Rundgewölbe (3) besteht, und dass unter Anbringung der Platten (4, 4') an den Seitenflächen (23, 23') der Platte (2) dieser Abschnitt eingesetzt und entlang der Querfuge mit dem vorher eingesetzten Abschnitt verschweisst wird und schliesslich die Längsplatten (4, 4') an der Platte (2) befestigt werden.

20. Verfahren zur Ausführung eines langgestreckten Gebildes nach Anspruch 18, dadurch gekennzeichnet, dass mindestens über eine bestimmte Länge die Längsplatten (4, 4') gleichzeitig mit der Armierung so montiert werden, dass diese Platten (4, 4') die Seitenschalungen bilden, zwischen denen das Vergiessen der Betonplatte (2) erfolgt.

21. Verfahren zur Ausführung eines langgestreckten rohrförmigen Gebildes (1), bestehend aus einem Unterteil, das aus einer ebenen starren Betonplatte (2), die eine auf dem Boden aufliegende Unterseite (21), eine Oberseite (22) und zwei zur Längsachse parallele Seitenflächen (23, 23') aufweist, und aus einem oberen als Gewölbe ausgebildeten Metallteil aus einer gekrümmten dünnen Wand, deren beiden Seitenenden (31, 31') an der Bodenplatte (2) befestigt sind, wobei das Gebilde (1) aus entlang einer Längsachse hintereinander angeordneten vorgefertigten Abschnitte besteht, dadurch gekennzeichnet, dass man einerseits zwischen der Platte und dem Oberteil Verbindungsbaugruppen (36) mit jeweils zwei über eine obere Querplatte (32) miteinander verbundenen parallelen Längsplatten (4, 4'), und anderseits Gewölbeteile (33), die je aus einer sich tangential an die Längsplatten (4, 4') anschliessbaren gekrümmten Wand besteht, fertigt, dass jede Verbindungsbaugruppe (36) als Schalung zur Ausbildung der entsprechenden Teile der Bodenplatte (2) eingesetzt wird, und dass, nach Ausführung einer Auflagefläche, zuerst der Einbau der Einheiten (20) erfolgt, die jeweils aus einer einem Element der Platte (2) zugeordneten Verbindungebaugruppe (36) bestehen, die Ausrichtung mit den bereits angeordneten Elemente (20a), alsdann das Schweissen der Kanten gegenüber den Längsplatten (4, 4') und der Querplatten (32) erfolgt, schliesslich jedes Gewölbeteil (33) auf die entsprechende Einheit gesetzt wird, wobei diese entlang deren Seitenenden (31, 31') mit den Längsplatten (4, 4') und entlang einer Querfuge mit dem bereits angeordneten benachbarten Gewölbeteil (33a) verschweisst wird.

22. Verfahren zur Ausführung eines langgestreckten rohrförmigen Gebildes (1), bestehend aus einem Unterteil, das aus einer ebenen starren Betonplatte (2) mit einer Armierung (24) gebildet ist, einer auf dem Boden aufliegenden Unterseite (21), eine Oberseite (22) und zwei zur Längsachse (23, 23') parallele Seitenflächen (23, 23') aufweist, und aus einem oberen als Gewölbe ausgebildetes Metallteil aus einer gekrümmten dünnen Wand (3), wobei deren beiden Seitenenden (31, 31') an der Bodenplatte (2) befestigt sind, dadurch gekennzeichnet, dass das Metallteil des Gebildes (1) aus vorgefertigten Abschnitte (37) besteht, die jeweils eine gekrümmte durch zwei Längsplatten (4, 4') verlängerte Wand (3) aufweisen, deren Unterkanten (43) über eine untere Querplatte (38) verbunden sind, und dass, nach Anordnung einer Auflagefläche (11), zuerst diese Metallabschnitte angeordnet werden, wobei jeder Abschnitt (37) auf der dessen Unterteil bildenden Querplatte (38) aufliegt, dann diese Abschnitte (37) über mindestens eine bestimmte Länge zusammengeschweisst werden, die Armierung (24) eingesetzt wird, und die Betonplatte (2) in die das Unterteil des Gebildes (1) somit bildende Schalung gegossen wird.

23. Verfahren zur Ausführung eines Gebildes (1) nach einem der Ansprüche 18 bis 22, dadurch gekennzeichnet, dass die Längsplatten (4, 4') mittels regelmässig im Abstand angeordneten vorgespannten Stangen (5) zur Anlage kommen, welche quer zur Längsachse verlaufende in der Platte (2) angeordnete Kanäle (53) durchqueren, wobei diese Stangen (5) mit einer Vorspannung beaufschlagt werden, damit gleichzeitig die Biegefestigkeit der Platte (2) und das Festhalten der Längsplatten (4, 4) an den Seitenflächen (23, 23') gewährleistet wird.

24. Verfahren zur Ausführung eines langgestreckten Gebildes (1) nach einem der Ansprüche 18 bis 23, dadurch gekennzeichnet, dass die Querplatte aus zwei getrennten, jeweils entlang eines der Seitenenden des Gewölbes (3) zusammengeschweissten Teile (32a, 32b) besteht, und zueinander bei teilweiser Überlappung verlaufen, sodass eine geringfügige Annäherung der Längsplatten (4, 4') zu deren Befestigung an der Bodenplatte (2) ermöglicht wird, wobei nach einer Stabilisierung die beiden Querplattenteile geschweisst werden.

25. Verfahren zur Ausführung eines langgestreckten rohrförmigen Gebildes (1), bestehend aus einem Unterteil, das aus einer ebenen starren Stahlbetonplatte (2) gebildet ist, die eine Unterseite (21), eine Oberseite (22) und zwei zur Längsachse parallelen Seitenflächen (23, 23') aufweist, und aus einem oberen als Gewölbe ausgebildeten Metallteil aus einer gekrümmten dünnen Wand (3), deren beiden Seitenenden (31, 31') an der Bodenplatte (2) befestigt sind, wobei das Gebilde (1) aus entlang einer Längsachse hintereinander angeordneten Fertigabschnitte besteht, dadurch gekennzeichnet, dass vorgefertigte Plattenelemente hergestellt werden, bestehend jeweils aus zwei parallelen Längsplatten (4, 4'), welche durch zwei im Abstand angeordneten, je eine untere (38') bzw. eine obere (32') parallelen Querplatten miteinander verbunden werden, sodass einer im Querschnitt geschlossener Kasten (35) begrenzt wird, in den Beton (20) mit ausreichendem Druck gegossen wird zur einwandfreien Haftung an den Innenflächen der Platten (4, 4', 32', 38'), und dass, zur Herstellung des langgestreckten Gebildes über eine bestimmte Länge, diese Elemente der Bodenplatte (2) hintereinander angeordnet werden, in dem jeder Metallkasten (35) an den bereits angeordneten benachbarten Kasten entlang dessen entsprechenden Kanten geschweisst wird, ein Mörtel in jede Querfuge zwischen zwei Plattenelemente mit Druck eingespritzt wird, dann auf dieser durchgehend so gebildeten Platte Gewölbeteile (33) jeweils aus einer gekrümmten Wand angeordnet werden, sodass sie sich an den oberen Enden (40, 40') der Längsplatten (4, 4') tangential anschliessen und jedes Gewölbeteil (33) mit dem bereits angeordneten benachbarten Gewölbeteil (33a) entlang deren gegenüberliegenden Kanten und an die oberen Enden (40, 40') der Längsplatten (4, 4') entlang den Seitenenden (31, 31') geschweisst wird.

## Claims

1. Elongated enclosure (1) designed to withstand internal pressure capable of exceeding 10 bars, which forms a fluid-tight sealed tubular space (A) having a truncated transverse section extending along a longitudinal axis, said enclosure (1) being constituted by a lower part formed by a rigid reinforced concrete slab (2) capable of withstanding flexion resulting from the internal pressure and comprising a lower face (21) resting on the ground, an upper face (22) and two lateral faces (23) parallel to said longitudinal axis, and by an upper part (3) constituted by a thin metal wall shaped like a curved arch extending between two lateral ends (31, 31') parallel to said longitudinal axis and connected to said slab (2), each of which by means of a longitudinal junction piece having an upper portion which connects tangentially to said lateral end (31, 31') of said arch (3) and a lower portion attached to said slab (2).
characterized in that said upper face (22) of said slab (2) has a width substantially equal to the space separating said two lateral ends (31, 31') of said curved arch (3) and each junction piece is constituted by a flat plate (4, 4') pressed from the outside against the corresponding lateral face (23, 23') of said slab (2) and associated with retaining means (5, 42) capable of preventing shifting of said plate (4, 4') along said corresponding lateral face (23, 23') of said slab (2) under the effect of strain (15) generated by internal pressure and of preventing the detachment of said plates (4, 4') under the effect of external forces (13).

2. Elongated enclosure according to claim 1, characterized in that each of said longitudinal plates (4, 4') serving to attach said arch (3) is pressed against said corresponding lateral face (23, 23') of said slab (2) under a pressure at least sufficient to counteract, by means of friction, shifting of said plate.

3. Elongated enclosure according to claim 2, characterized in that the means for retaining said two longitudinal plates (4, 4') used to attach said arch (3) against said lateral faces (23, 23') of said slab (2) are formed by a plurality of transverse tension bars (5) spread out over the entire length of said enclosure, each of which extends over the entire width of said slab (2), while passing through said two plates (4, 4') and said slab (2), each bar (5) being fitted, at each end, with an external device (52) for support on said corresponding plate (4, 4'), said bars (5) being subjected to a tension which ensures simultaneously resistance of said slab to the flexure forces generated by internal pressure and the pressing of each attachment plate (4, 4') against said corresponding lateral face (23, 23') of said slab (2) under a pressure sufficient to prevent, by means of friction, shifting of said plate.

4. Elongated enclosure according to one of claims 1 to 3, characterized in that a fluid-tightness cord (26) is inserted between each attachment plate (4, 4') and the lateral face (23, 23') of said slab (2), against which it is pressed.

5. Elongated enclosure according to one of claims 1 to 3, characterized in that said two lateral ends (31, 31') of said arch (3) are connected by means of a transverse plate (32) which seals said tubular space (A) in fluid-tight fashion and which covers one of said horizontal faces, the upper or lower respectively, of said slab (2) and comprising two parallel longitudinal edges attached rigidly and in fluid-tight fashion, along each lateral end (31, 31'), respectively, of said arch (3).

6. Elongated enclosure according to claim 5, characterized in that said transverse plate (32) is made of two separate parts (32a, 32b), each of which is welded, respectively, along one of said lateral ends (31, 31') of said arch (3) and partially overlaps the other, so as to allow said lateral attachment plates (4, 4') to be drawn together slightly, said parts (32a, 32b) of said transverse plate being welded after being stabilized.

7. Elongated enclosure according to one of claims 5 and 6, characterized in that said transverse plate (32) is fitted, on its face turned toward said slab, with projecting attachment elements cemented in said slab (2).

8. Elongated enclosure according to one of the preceding claims, characterized in that each attachment plate (4, 4') is fitted, on its internal face turned toward said slab (2), with at least one projecting fastening element (42) cooperating with at least one paired, hollowed element (25) provided at the desired level on said corresponding lateral face (23) of said slab (2).

9. Elongated enclosure according to claim 8, characterized in that the fastening elements (42) are made of ribs provided on the internal faces of the attachment plates (4) parallel to the longitudinal axis and capable of being inserted into grooves (25) having a matching hollowed shape and provided on said lateral faces (23) of said slab (2).

10. Elongated enclosure according to one of the preceding claims, characterized in that, since said arch (3) is constituted by prefabricated longitudinal sections (3a, 3b) placed in succession one after the other, each arch section (3) is made in one piece comprising a central half-shell-shaped part constituting the arch (3) itself and extended on each side, by a substantially flat part constituting said attachment plate (4, 4').

11. Elongated enclosure according to claim 5, characterized in that, since said arch is made of prefabricated sections (3a, 3b) placed one after the other, said two lateral plates (4, 4') belonging to each section are preliminarily welded to said transverse plate (32) so as to constitute a prefabricated assembly capable of being positioned separately on said slab (2), said arch component (33) being welded along the lateral edges thereof (31, 31') to the upper ends (40, 40') of said lateral plates (4, 4').

12. Elongated enclosure according to one of the preceding claims, characterized in that said arch (3) substantially covers a half-circle centered substantially at the level of said upper face (22) of said slab (2).

13. Elongated enclosure according to one of claims 1 to 11, characterized in that said arch (3) covers a substantially circular sector centered above said upper face (22) of said slab (2), the planes tangent to said arch (3) along its lateral ends (31, 31') forming obtuse dihedrons (B) in conjunction with said upper face (22) of said slab (2).

14. Elongated enclosure according to claim 13, characterized in that said lateral faces (23, 23') of said slab (2) are inclined in relation to said upper face (22) by an angle equal to the angle of said planes tangent to the points of origin (31, 31') of said arch (3), and each of said attachment plates (4, 4') extends along the corresponding tangent plane.

15. Elongated enclosure according to claim 13, characterized in that since said lateral faces (23, 23') of said slab (2) are parallel and substantially vertical, each attachment plate (4, 4') is fitted, at its upper end, with a curved part (40, 40') whose upper edge forms, in conjunction with said plate (4, 4'), an angle (A') complementary to the angle (A) of inclination of the plane tangent to the point of origin of said arch (3), so as to be connected tangentially to said lateral edge (31, 31') of the latter.

16. Elongated enclosure according to one of the preceding claims, characterized in that the lower edges of said longitudinal plates (4, 4') are connected by a transverse plate (33) constituting said lower portion of said enclosure resting on the installation surface, said concrete slab (2) being poured inside the formwork thus constituted by said transverse plate (33) and said two longitudinal plates (4, 4').

17. Elongated enclosure according to claim 16, characterized in that said longitudinal plates (4, 4') are connected by means of two parallel transverse plates, a plate (33) forming a connection between the lower edges (43, 43') and a plate (32) forming a connection between the upper ends (40, 40') of said longitudinal plates (4, 4'), respectively, the assembly of said two transverse plates (32, 33) and of said two longitudinal plates (4, 4') forming a box (35) closed in cross section, inside which concrete (20) is poured to form a slab (2) whose framework is constituted by the metal wall of said box (35).

18. Method for producing an elongated enclosure (1), comprising a lower part formed from a rigid, flat reinforced concrete slab (2) which comprises a lower face (21) resting on the ground, an upper face (22) and two lateral faces (23, 23') parallel to said longitudinal axis, and an upper arch-shaped metal part (3) constituted by a thin curved wall in the form of a cylindrical sector extending between two lateral ends (31, 31') attached to said slab (2),
characterized in that a continuous slab (2) made of concrete poured in place and which incorporates an iron framework is made as work progresses, at least over a certain length, said slab (2) being poured between two flat formworks whose spacing, at least at the level of the upper face of said slab, is substantially equal to the space separating said lateral ends of said cylindrical sector, and in that to produce each section of the upper metal part, two longitudinal plates (4, 4') are pressed against said lateral faces (23, 23') of said slab (2) and are welded to said ends of the adjacent longitudinal plates already laid, and the arch section (33) is laid and welded, on the one hand, along the transverse joint connecting with the previously-laid arch section (33a) and on the other hand, to said upper ends (40, 40') of said longitudinal plates (4, 4') and retaining means (5) of said longitudinal plates (4, 4') are introduced on said lateral faces (23, 23') of the slab (2) under a sufficient pressure to allow the connection of the arch (3) with the slab (2).

19. Method for producing an elongated enclosure according to claim 18, characterized in that each section of the upper part is formed in one piece comprising a cylindrical arch (3) extended, at each lateral end (31, 31'), by a longitudinal plate (4, 4') and in that said section is laid by pressing said plates (4, 4') against said lateral faces (23, 23') of said slab (2), the section is welded along the transverse joint connecting with the previously -laid section, and said longitudinal plates (4, 4') are attached to said slab (2).

20. Method for producing an elongated enclosure according to claim 18, characterized in that said longitudinal plates (4, 4') are put in place, at least over a determinate length, at the same time that said iron framework is installed, so that said plates (4, 4') constitute lateral formworks between which said concrete slab (2) is poured.

21. Method for producing an elongated enclosure (1) comprising a lower part constituted by a rigid, flat reinforced concrete slab (2) comprising a lower face (21) resting on the ground, an upper face (22), and two lateral faces (23, 23') parallel to the longitudinal axis, and by an upper metal arch-shaped part formed from a thin curved wall (3) whose two lateral ends (31, 31') are attached to said slab (2).
characterized in that, said enclosure (1) being constituted by prefabricated sections placed one after the others along a longitudinal axis, on the one hand, junction assemblies (36) between the slab and the upper part, each of which comprises two parallel longitudinal plates (4, 4') connected by means of a upper transverse plate (32), and on the other hand, arch components (33), each of which is constituted by a curved wall capable of being connected tangentially to said longitudinal plates (4, 4'), are built, and in that each junction assembly (36) is used as a formwork in which the corresponding portion of said slab (2) is molded, and in that after having made an installation surface (11), first said assemblies (20), each of which is constituted by a junction assembly (36) linked to a slab component (2), are put in place; the alignment with previously-laid components (20a) is effected; then, the opposite edges of said longitudinal plates (4, 4') and of said transverse plates (32) are welded; next, each arch component (33) is placed on the corresponding assembly (20) by welding it, along its lateral ends (31, 31'), to said longitudinal plates (4, 4') and along a transverse joint connecting with the adjacent arch component (33a) already installed.

22. Method for producing an elongated enclosure (1) comprising a lower part constituted by a rigid, flat concrete slab (2) comprising an iron framework (24) having a lower face (21) resting on the ground, an upper face (22), and two lateral faces (23, 23') parallel to the longitudinal axis, and by an upper metal arch-shaped part formed from a thin curved wall (3) whose two lateral ends (31, 31') are attached to said slab (2),
characterized in that, the metal part of said enclosure (1) is constituted by prefabricated sections (37), each of which comprises a curved wall (3) extended by two longitudinal plates (4, 4') and whose lower edges (43) are connected by a lower transverse plate (38) and, in that after having prepared an installation surface (11), first, said metal sections are laid, each section (37) resting on said transverse plate (38) forming its lower part; said sections (37) are welded together at least over a determinate length; said iron framework (24) is laid; and said concrete slab (2) is poured in the formwork thus constituted by the lower part of said enclosure (1).

23. Method for producing an enclosure (1) according to one of claims 18 to 22, characterized in that said longitudinal plates (4, 4') are pressed in place using prestressing bars (5) evenly spaced and extending in ducts (53) formed in said slab (2) transversely to said longitudinal axis, said bars (5) being placed under prestressing tension capable of ensuring, simultaneously, the flexion resistance of said slab (2) and the retaining of said longitudinal plates (4, 4') on said lateral faces (23, 23').

24. Method for producing an elongated enclosure (1) according to one of claims 18 to 23, characterized in that said transverse plate is made of two separate parts, (32a, 32b), each of which is welded along one of the lateral ends of said arch (3), respectively, and extends toward the other while partially overlapping, so as to allow said longitudinal plates (4, 4') to be drawn together slightly to allow their attachment to said slab (2), the two parts of said transverse plate being welded after they are stabilized.

25. Method for producing an elongated enclosure (1) comprising a lower part constituted by a rigid, flat concrete slab (2) having a lower face (21), an upper face (22), and two lateral faces (23, 23') parallel to the longitudinal axis, and by an upper metal arch-shaped part formed from a thin curved wall (3) whose two lateral ends (31, 31') are attached to said slab (2),
characterized in that said enclosure (1) being constituted by prefabricated sections placed one after the others along a longitudinal axis, prefabricated slab components are made, each comprising two parallel longitudinal plates (4, 4') connected together by two parallel transverse plates respectively lower (38') and upper (32') spaced one from the other in order to provide a box (35) closed in cross section inside which concrete (20) is poured under a sufficient pressure to well adapt to the internal faces of the plates (4, 4', 32', 38') and in that to produce the elongated enclosure over a certain length, said slab components (2) are placed one after the other by welding each metal box (35) on the adjacent box already laid along the corresponding edges thereof, a mortar is injected under pressure in each transverse joint between two slab components, then on the continuous slab thus formed are placed arch components (33) each comprising a curved wall in order to be connected tangentially to the upper ends (40, 40') of the longitudinal plates (4, 4') and each arch component (33) is welded on the adjacent arch component (33a) already laid along the opposite edges thereof and on the upper ends (40, 40') of the longitudinal plates (4, 4') along its lateral ends (31, 31').
